# EUROPEAN PATENT APPLICATION

(11) **EP 4 823 022 A1**
(43) Date of publication of application: **14.10.2026**
(21) Application number: 23960563.7
(22) Date of filing: 07.12.2023
(51) Int. Cl.: H04L 5/00

(54) **CONNECTION RELEASE METHOD, DEVICE, AND STORAGE MEDIUM**

(71) Applicant: Beijing Xiaomi Mobile Software Co., Ltd., Beijing 100085 (CN)
(72) Inventor: GONG, Yubing, Beijing 100085 (CN); MAO, Yuxin, Beijing 100085 (CN)
(74) Representative: Stöckeler, Ferdinand
(86) International application number: PCT/CN2023/137268
(87) International publication number: WO 2025/118251

(57) **Abstract**

Embodiments of the present invention relate to a connection release method, a device, and a storage medium. The method comprises: sending a first message to a second network element, the first message being used for triggering and releasing a user plane connection, the user plane connection being a connection between a terminal device and a first network element, the first network element being a network element having a location management function or a sensing function, and the second network element being a network element having an access and mobility management function. In this way, the terminal device can actively trigger release of a user plane connection through the first message, thereby improving the flexibility of user plane connection management.

## Description

### TECHNICAL FIELD

The present disclosure relates to the field of communication technology, and specifically to a connection releasing method and device, and a storage medium.

### BACKGROUND

**In** a wireless communication system, a user plane connection can be established between a terminal and a network element having a positioning management function, and positioning-related messages can be sent or received through the user plane connection, thereby improving a communication efficiency of a positioning service.

### SUMMARY

Embodiments of the present disclosure provide a connection releasing method and device, and a storage medium.

According to a first aspect of the embodiments of the present disclosure, a connection releasing method is provided, which is performed by a user equipment (UE), including:

sending a first message to a second network element, in which the first message is used to trigger release of a user plane connection, the user plane connection is a connection between the UE and a first network element, the first network element is a network element having a positioning management function or a sensing function, and the second network element is a network element having an access and mobility management function.

According to a second aspect of the embodiments of the present disclosure, a connection releasing method is provided, which is performed by a second network element, in which the second network element is a network element having an access and mobility management function, and the method includes:
receiving a first message sent by a user equipment (UE), in which the first message is used to trigger release of a user plane connection, the user plane connection is a connection between the UE and a first network element, the first network element is a network element having a positioning management function or a sensing function; and
sending a fourth message to the first network element, in which the fourth message is used to request the first network element to release the user plane connection.

According to a third aspect of the embodiments of the present disclosure, a connection releasing method is provided, which is performed by a first network element, in which the first network element is a network element having a positioning management function or a sensing function, and the method includes:
receiving a fourth message sent by a second network element, in which the fourth message is used to request the first network element to release a user plane connection, the user plane connection is a connection between a user equipment (UE) and the first network element, the second network element is a network element having an access and mobility management function; and
determining whether to accept a request, from the UE, for releasing the user plane connection.

According to a fourth aspect of the embodiments of the present disclosure, a connection releasing method is provided, which is performed by a core network device comprising a first network element and a second network element, wherein the first network element is a network element having a positioning management function or a sensing function, and the second network element is a network element having an access and mobility management function, and the method includes:
receiving, by the second network element, a first message sent by a user equipment (UE), wherein the first message is used to trigger release of a user plane connection, the user plane connection is a connection between the UE and a first network element, the first network element is a network element having a positioning management function or a sensing function;
sending, by the second network element, a fourth message to the first network element, wherein the fourth message is used to request the first network element to release the user plane connection; and
determining, by the first network element, whether to accept a request, from the UE, for releasing the user plane connection.

According to a fifth aspect of the embodiments of the present disclosure, a UE is provided, comprising:
a transceiver module, configured to send a first message to a second network element, wherein the first message is used to trigger release of a user plane connection, the user plane connection is a connection between the UE and a first network element, the first network element is a network element having a positioning management function or a sensing function, and the second network element is a network element having an access and mobility management function.

According to a sixth aspect of the embodiments of the present disclosure, a second network element is provided, a network device is provided, including:
a transceiver module, configured to receive a first message sent by a user equipment (UE), wherein the first message is used to trigger release of a user plane connection, the user plane connection is a connection between the UE and a first network element, the first network element is a network element having a positioning management function or a sensing function; and send a fourth message to the first network element, wherein the fourth message is used to request the first network element to release the user plane connection.

According to a seventh aspect of the embodiments of the present disclosure, a first network element is provided, including:
a transceiver module, configured to receive a fourth message sent by a second network element, wherein the fourth message is used to request the first network element to release a user plane connection, the user plane connection is a connection between a user equipment (UE) and the first network element; and
a processing module, configured to determine whether to accept a request, from the UE, for releasing the user plane connection.

According to an eighth aspect of the embodiments of the present disclosure, a core network device is provided, including a first network element and a second network element, wherein the first network element is configured to perform the method described in the alternative implementations of the third aspect, and the second network element is configured to perform the method described in the alternative implementations of the second aspect.

According to a ninth aspect of the embodiments of the present disclosure, a communication system is provided, including a user equipment (UE), an access network device, a core network device and a server, wherein the core network device comprises a first network element and a second network element, the UE is configured to perform the method described in the alternative implementations of the first aspect, the access network device is configured to perform the method described in the alternative implementations of the fourth aspect, the first network element is configured to perform the method described in the alternative implementations of the third aspect, the second network element is configured to perform the method described in the alternative implementations of the second aspect, and the second network element is configured to perform the method described in the alternative implementations of the fifth aspect.

According to a tenth aspect of the embodiments of the present disclosure, a communication device is provided, including one or more processors; in which the communication device is configured to perform alternative implementations of the first aspect, the second aspect, the third aspect or the fourth aspect.

According to an eleventh aspect of the embodiments of the present disclosure, a storage medium having instructions stored thereon is provided. When the instructions are running on a communication device, the communication device is caused to perform the method described in the alternative implementations of the first aspect, the second aspect, the third aspect or the fourth aspect.

The technical solution provided by the embodiments of the present disclosure may include the following beneficial effects: the first message is sent to the second network element, the first message is used to trigger the release of the user plane connection, the user plane connection is a connection between the UE and the first network element, the first network element is a network element having a positioning management function or a sensing function, and the second network element is a network element having an access and mobility management function. In this way, the UE may actively trigger the release of the user plane connection through the first message, thereby improving the flexibility of user plane connection management.

It is to be understood that the foregoing general description and the following detailed description are exemplary and explanatory only and are not restrictive of the present disclosure.

### BRIEF DESCRIPTION OF THE DRAWINGS

In order to more clearly illustrate technical solutions in the embodiments of the present disclosure, the drawings required for describing the embodiments are introduced below. The following drawings are only some embodiments of the present disclosure and do not impose specific limitations on the protection scope of the present disclosure.
FIG. 1A is a schematic diagram of a communication system according to an embodiment of the present disclosure;
FIG. 1B is a schematic diagram of a communication system according to an embodiment of the present disclosure;
FIG. 2A is a flowchart of a connection releasing method according to an embodiment of the present disclosure;
FIG. 2B is a flowchart of a connection releasing method according to an embodiment of the present disclosure;
FIG. 2C is a flowchart of a connection releasing method according to an embodiment of the present disclosure;
FIG. 2D is a flowchart of a connection releasing method according to an embodiment of the present disclosure;
FIG. 2E is a flowchart of a connection releasing method according to an embodiment of the present disclosure;
FIG. 3Ais a flowchart of a connection releasing method according to an embodiment of the present disclosure;
FIG. 3B is a flowchart of a connection releasing method according to an embodiment of the present disclosure;
FIG. 3C is a flowchart of a connection releasing method according to an embodiment of the present disclosure;
FIG. 3D is a flowchart of a connection releasing method according to an embodiment of the present disclosure;
FIG. 4Ais a flowchart of a connection releasing method according to an embodiment of the present disclosure;
FIG. 4B is a flowchart of a connection releasing method according to an embodiment of the present disclosure;
FIG. 4C is a flowchart of a connection releasing method according to an embodiment of the present disclosure;
FIG. 5A is a flowchart of a connection releasing method according to an embodiment of the present disclosure;
FIG. 5B is a flowchart of a connection releasing method according to an embodiment of the present disclosure;
FIG. 5C is a flowchart of a connection releasing method according to an embodiment of the present disclosure;
FIG. 5D is a flowchart of a connection releasing method according to an embodiment of the present disclosure;
FIG. 5E is a flowchart of a connection releasing method according to an embodiment of the present disclosure;
FIG. 6 is a flowchart of a connection releasing method according to an embodiment of the present disclosure;
FIG. 7A is a block diagram of a user equipment (UE) according to an embodiment of the present disclosure;
FIG. 7B is a block diagram of a first network element according to an embodiment of the present disclosure;
FIG. 7C is a block diagram of a second network element according to an embodiment of the present disclosure;
FIG. 8A is a block diagram of a communication device according to an embodiment of the present disclosure; and
FIG. 8B is a block diagram of a chip according to an embodiment of the present disclosure.

### DETAILED DESCRIPTION

Embodiments of the present disclosure provide a connection releasing method and device, and a storage medium.

According to a first aspect of the embodiments of the present disclosure, there is provided a connection releasing method, which is performed by a user equipment (UE), including:
sending a first message to a second network element, in which the first message is used to trigger release of a user plane connection, the user plane connection is a connection between the UE and a first network element, the first network element is a network element having a positioning management function or a sensing function, and the second network element is a network element having an access and mobility management function.

In the above embodiments, the UE may actively trigger the release of the user plane connection through the first message, thereby improving the flexibility of user plane connection management.

In combination with some embodiments of the first aspect, in some embodiments, the first message includes at least one of:
a first message identifier (ID);
a user plane connection release cause;
a user plane connection ID;
a UE ID; or
a first network element ID.

In the above embodiments, the release of the user plane connection may be triggered by the above at least one information in the first message.

In combination with some embodiments of the first aspect, in some embodiments, the method further includes:
receiving a second message sent by the second network element, in which the second message is any one of:
a first release message, in which the first release message indicates that the user plane connection is already released by the first network element;
a second release message, in which the second release message instructs the UE to release the user plane connection; or
a rejection message, in which the rejection message is used to reject the UE from releasing the user plane connection.

In the above embodiments, flexible management of the user plane connection may be achieved through any of the above messages.

In combination with some embodiments of the first aspect, in some embodiments, the second message includes at least one of:
a user plane connection ID;
a UE ID; or
a first network element ID.

In the above embodiments, flexible management of the user plane connection may be achieved through any of the above items.

In combination with some embodiments of the first aspect, in some embodiments, the method further includes:
determining that the second message is second release indication information; and
releasing the user plane connection.

In the above embodiment, the user plane connection may be released by the UE.

In combination with some embodiments of the first aspect, in some embodiments, the method further includes:
sending a third message to the second network element, in which the third message indicates that the user plane connection is already released by the UE.

In the above embodiment, it is notified through the third message that the release of the user plane connection has been completed by the UE, thereby improving the reliability of user plane connection management.

In combination with some embodiments of the first aspect, in some embodiments, the method further includes:
determining that there is no other user plane connection between the UE and the first network element; and
releasing a packet data unit (PDU) session to which the user plane connection belongs, in which the PDU session is used to carry the user plane connection between the UE and the first network element.

In the above embodiment, the PDU session may be released to save system resources.

In combination with some embodiments of the first aspect, in some embodiments, the method further includes:
determining that a first condition is met; and
resending the first message;
in which the first condition includes at least one of:
   the second message being used to reject the UE from releasing the user plane connection; or
   the second message being not received within a specific time period after the first message is sent.

In the above embodiment, in a case where the user plane connection is not released, the UE may resend the first message to trigger the release of the user plane connection again, thereby improving the reliability of user plane connection management.

According to a second aspect of the embodiments of the present disclosure, there is provided a connection releasing method, which is performed by a second network element. The second network element is a network element t having an access and mobility management function. The method includes:
receiving a first message sent by a UE, in which the first message is used to trigger release of a user plane connection, the user plane connection is a connection between the UE and a first network element, the first network element is a network element having a positioning management function or a sensing function; and
sending a fourth message to the first network element, in which the fourth message is used to request the first network element to release the user plane connection.

In the above embodiments, the second network element forwards the first message, which may realize the release of the user plane connection triggered by the UE, thereby improving the flexibility of user plane connection management.

In combination with some embodiments of the second aspect, in some embodiments, the first message includes at least one of:
a first message identifier (ID);
a user plane connection release cause;
a user plane connection ID;
a UE ID; or
a first network element ID.

In combination with some embodiments of the second aspect, in some embodiments, the first message includes the first network element ID, and sending the fourth message to the first network element includes:
sending the fourth message to a first network element corresponding to the first network element ID.

In combination with some embodiments of the second aspect, in some embodiments, the method further includes:
receiving a fifth message sent by the first network element, in which the fifth message is any one of:
a first release message, in which the first release message indicates that the user plane connection is already released by the first network element;
a second release message, in which the second release message instructs the UE to release the user plane connection; or
a rejection message, in which the rejection message is used to reject the UE from releasing the user plane connection.

In combination with some embodiments of the second aspect, in some embodiments, the fifth message includes at least one of:
a user plane connection ID;
a UE ID; or
a first network element ID.

In combination with some embodiments of the second aspect, in some embodiments, the method further includes:
sending a second message to the UE, in which a content indicated by the second message is the same as that of the fifth message.

In combination with some embodiments of the second aspect, in some embodiments, the method further includes:
receiving a third message sent by the UE, in which the third message indicates that the user plane connection is already released by the UE; and
sending a sixth message to the first network element, in which a content indicated by the sixth message is the same as that of the third message.

According to a third aspect of the embodiments of the present disclosure, a connection releasing method is provided, which is performed by a first network element. The first network element is a network element having a positioning management function or a sensing function. The method includes:
receiving a fourth message sent by a second network element, in which the fourth message is used to request the first network element to release a user plane connection, the user plane connection is a connection between a user equipment (UE) and the first network element; and
determining whether to accept a request, from the UE, for releasing the user plane connection.

In the above embodiment, the first network element determines whether to accept the request, from the UE, for releasing the user plane connection, thereby realizing the release of the user plane connection triggered by the UE and improving the flexibility and security of user plane connection management.

In combination with some embodiments of the third aspect, in some embodiments, the fourth message includes at least one of:
a first message identifier (ID);
a user plane connection release cause;
a user plane connection ID;
a UE ID; or
a first network element ID.

In combination with some embodiments of the third aspect, in some embodiments, the method further includes: sending a fifth message to the second network element, in which the fifth message includes any one of:
first release indication information, in which the first release indication information indicates that the user plane connection is already released by the first network element;
second release indication information, in which the second release indication information instructs the UE to release the user plane connection; or
rejection information, in which the rejection information is used to reject the UE from releasing the user plane connection.

In combination with some embodiments of the third aspect, in some embodiments, the method further includes:
releasing the user plane connection between the UE and the first network element.

In combination with some embodiments of the third aspect, in some embodiments, the method further includes:
receiving a sixth message sent by the second network element, in which the sixth message indicates that the user plane connection is already released by the UE.

According to a fourth aspect of the embodiments of the present disclosure, a connection releasing method is provided, which is performed by a core network device including a first network element and a second network element. The first network element is a network element having a positioning management function or a sensing function. The second network element is a network element having an access and mobility management function. The method includes:
receiving, by the second network element, a first message sent by a UE, in which the first message is used to trigger release of a user plane connection, the user plane connection is a connection between the UE and the first network element, the first network element is a network element having a positioning management function or a sensing function;
sending, by the second network element, a fourth message to the first network element, in which the fourth message is used to request the first network element to release the user plane connection; and
determining, by the first network element, whether to accept a request, from the UE, for releasing the user plane connection.

According to a fifth aspect of the embodiments of the present disclosure, a UE is provided. The UE may include at least one of a transceiver module or a processing module. The UE may be configured to perform alternative implementations of the first aspect.

According to a sixth aspect of the embodiments of the present disclosure, a second network element is provided. The second network element may include at least one of a transceiver module or a processing module. The second network element may be configured to perform alternative implementations of the second aspect.

According to a seventh aspect of the embodiments of the present disclosure, a first network element is provided. The first network element may include at least one of a transceiver module or a processing module. The first network element may be configured to perform alternative implementations of the third aspect.

According to an eighth aspect of the embodiments of the present disclosure, a core network device is provided, including a first network element and a second network element. The first network element may be configured to perform alternative implementations of the third aspect. The second network element may be configured to perform alternative implementations of the second aspect.

According to a ninth aspect of the embodiments of the present disclosure, a communication system is provided. The communication system may include a UE and a core network device including a first network element and a second network element. The UE is configured to perform the method described in alternative implementations of the first aspect. The first network element is configured to perform the method described in alternative implementations of the third aspect. The second network element is configured to perform the method described in alternative implementations of the second aspect.

According to a tenth aspect of the embodiments of the present disclosure, a communication device is provided, including: one or more processors. The communication device is configured to perform the alternative implementations of the first aspect, the second aspect, the third aspect or the fourth aspect.

According to a sixteenth aspect of the embodiments of the present disclosure, a storage medium having instructions stored thereon is provided. When the instructions are running on a communication device, the communication device is caused to perform the method described in an alternative implementation of the first aspect, the second aspect, the third aspect or the fourth aspect.

According to a seventeenth aspect of the embodiments of the present disclosure, a program product is provided. When the program product is executed by a communication device, the communication device is caused to perform the method described in an alternative implementation of the first aspect, the second aspect, the third aspect or the fourth aspect.

According to an eighteenth aspect of the embodiments of the present disclosure, a computer program is provided. When the computer program is running on a communication device, the communication device is caused to perform the method described in an alternative implementation of the first aspect, the second aspect, the third aspect or the fourth aspect.

According to a nineteenth aspect of the embodiments of the present disclosure, a chip or a chip system is provided. The chip or chip system includes a processing circuit configured to perform the method described in an alternative implementation of the first aspect, the second aspect, the third aspect or the fourth aspect.

It is understandable that the above-mentioned UE, the network device (access network device, core network device, first network element, second network element), the communication device, the communication system, the storage medium, the program product, the computer program, the chip or chip system are all used to execute the method proposed in the embodiments of the present disclosure. Therefore, regarding the beneficial effects that can be achieved, reference may be made to the beneficial effects in the corresponding method, which will not be repeated here.

The embodiments of the present disclosure provide a connection releasing method and device, and a storage medium. In some embodiments, the terms such as connection releasing method, information processing method, communication method, etc. may be replaced with each other, the terms such as connection releasing apparatus, information processing apparatus, communication apparatus, communication device, etc. may be replaced with each other, and the terms such as information processing system, communication system, etc. may be replaced with each other.

The embodiments of the present disclosure are not exhaustive, but are only illustrative, and are not intended to be a specific limitation on the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, respective embodiments may be arbitrarily combined, for example, some or all steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B", "A and/or B", "in one case, A; in another case, B", "in response to one case, A; in response to another case, B", etc. may include the following technical solutions according to situations: in some embodiments, A (i.e., A is executed independently of B); in some embodiments, B (i.e., B is executed independently of A); in some embodiments, one is selected from A and B to be executed (i.e., A and B are selectively executed); in some embodiments, A and B (i.e., both A and B are executed). When there are more branches such as A, B, C, etc., the above is applicable.

In some embodiments, descriptions such a "A or B", etc. may include the following technical solutions according to situations: in some embodiments, A (i.e., A is executed independently of B); in some embodiments, B (i.e., B is executed independently of A); in some embodiments, one is selected from A and B to be executed (i.e., A and B are selectively executed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and may be one or more. Taking the "first apparatus" as an example, the number of "apparatuses" may be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" may be interpreted as directly carrying A or indirectly indicating A.

In some embodiments, the terms such as "in response to...", "in response to determining...", "in the case of...", "at the time of...", "when...", "if...", "provide that...", etc. may be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" may be used interchangeably.

In some embodiments, the apparatus may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject", etc. may be used interchangeably.

**In** some embodiments, the term "network" may be understood as apparatuses included in the network, such as a network device, an access network device, a core network device or the like.

In some embodiments, the network device may include at least one of an access network device, or a core network device.

In some embodiments, "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be used interchangeably.

In some embodiments, "terminal" or "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device can be replaced by a UE. For example, the various embodiments of the present disclosure may also be applied to a situation in which the communication between the access network device, the core network device, or the network device and the UE is replaced by the communication between multiple UEs (for example, device-to-device (D2D), vehicle-to-everything (V2X), etc.). In this case, the UE may be configured to have all or part of functions of the access network device. In addition, the term such as "uplink" and "downlink" may also be replaced by the term corresponding to the communication between the UEs (for example, "side"). For example, the uplink channel, the downlink channel, etc. may be replaced by the side channel or the direct-connection channel, and the uplink, the downlink, etc. may be replaced by the side link or the direct-connection link.

In some embodiments, the UE may be replaced by an access network device, a core network device, or a network device. In this case, the access network device, the core network device, or the network device may also be configured to have all or part of the functions of the UE.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

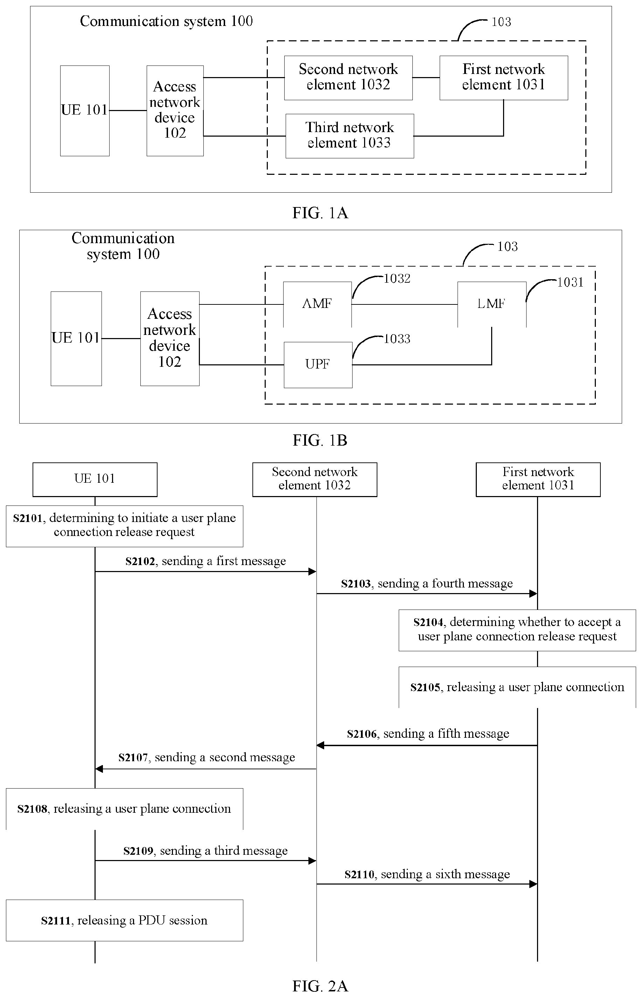

FIG. 1A is a schematic diagram of a communication system according to an embodiment of the present disclosure. As shown in FIG. 1A, the communication system 100 may include a terminal device (also called UE) 101, an access network device 102 and a core network device 103.

In some embodiments, the terminal device 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but the present disclosure is not limited thereto.

The access network device 102 in some embodiments of the present disclosure may be a node or device that accesses the terminal device to a wireless network. The access network device may include at least one of an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access point in a Wi-Fi system, but the present disclosure is not limited thereto.

In some embodiments, the technical solution of the present disclosure may be applicable to the Open RAN architecture. In this case, interfaces between or within the access network devices involved in the embodiments of the present disclosure may become internal interfaces of the Open RAN, and processes and information interactions between these internal interfaces may be implemented through software or programs.

In some embodiments, the access network device may include a central unit (CU) and a distributed unit (DU), in which the CU may also be called a control unit. A protocol layer of the network device, such as base station, may be divided by adopting the CU-DU structure. Some functions of the protocol layer are centrally controlled by the CU, and some or all of remaining functions of the protocol layer are distributed in the DU which is centrally controlled by the CU. The present disclosure is not limited thereto.

In some embodiments, the core network device 103 may include at least one of a first network element 1031, a second network element 1032, or a third network element 1033. For example, the core network device 103 may be a device including the first network element 1031, the second network element 1032, the third network element 1033, etc., or may be a plurality of devices or a group of devices, including all or part of the first network element 1031, the second network element 1032, etc., respectively. The network element may be virtual or physical. The core network device may include at least one of an Evolved Packet Core (EPC), a 5G Core Network (5GCN), a 6G Core Network (6GCN), a Next Generation Core (NGC), or other core network devices.

In some embodiments, the first network element 1031 may be a location management function (LMF).

In some embodiments, the first network element 1031 may be a sensing function (SF).

In some embodiments, the first network element 1031 may be a network element having a positioning management function or a sensing function, but the name is not limited thereto.

In some embodiments, the second network element 1032 may be an access and mobility management function (AMF).

In some embodiments, the second network element 1032 may be a network element having an access and mobility management function, but the name is not limited thereto.

In some embodiments, the third network element 1033 may be a user plane function (UPF).

In some embodiments, the third network element 1033 may be a network element having a user plane function, but the name is not limited thereto.

In some embodiments, the first network element 1031 may be independent of the core network device 103.

In some embodiments, the first network element 1031 may be a part of the core network device 103.

In some embodiments, the first network element 1031 may be a network element of an operator, or a network element provided by a third party other than the operator.

Fig. 1B is a schematic diagram of another architecture of a communication system according to an embodiment of the present disclosure. As shown in Fig. 1B, the communication system 100 may include a terminal device (also called UE) 101, an access network device 102, and a core network device 103. The core network device 103 may include at least one of an LMF, an AMF, or a UPF.

In some embodiments, the core network device 103 described in the embodiments of the present disclosure may further include other network elements, such as one or more of a session management function (SMF), a unified data management (UDM), a network exposure function (NEF) or a policy control function (PCF). For the specific functions, connection relationships and implementations of the above-mentioned LMF, AMF, UPF, SMF, UDM, NEF and PCF, reference may be made to the relevant descriptions in the relevant technologies (such as the 3GPP protocol), and the present disclosure will not elaborate on this.

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1A, but are not limited thereto. The entities shown in FIG. 1A are examples, and the communication system may include all or part of the entities in FIG. 1A, or may include other entities other than those shown in FIG. 1A, and the number and form of the entities are arbitrary, each entity may be physical or virtual, and the connection relationships between the entities are examples, and the entities may be connected or disconnected, and the connection may be in any manner, which may be a direct connection or an indirect connection, and may be a wired connection or a wireless connection.

The embodiments of the present disclosure may be applied to, Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In some embodiments of the present disclosure, a user plane connection may be established between the terminal device and the first network element in the above communication system, and the terminal device and the first network element may communicate through the user plane connection. For example, a path for the terminal device to send data to the first network element through the user plane connection may include: terminal device ->access network device ->third network element (for example, UPF) ->first network element (for example, LMF); a path for the first network element to send data to the terminal device through the user plane connection may include: first network element (for example, LMF) ->third network element (for example, UPF) ->access network device ->terminal device.

In some embodiments, the terminal device and the first network element may send or receive positioning-related messages through the user plane connection. In this way, a direct connection is established between the first network element and the terminal device, without the need for an intermediate network element (such as an access network device, a second network element) to process a signaling protocol stack, which may improve a communication efficiency of a positioning service. The above-mentioned positioning-related message may include an LTE positioning protocol (LPP) message, a location service supplementary services message, a location services message, or other positioning-related messages.

In some embodiments, the first network element or the terminal device may trigger establishment of the user plane connection.

In some embodiments, the first network element or the terminal device may maintain the established user plane connection.

In some embodiments, the first network element or the terminal device may modify or terminate the established user plane connection.

In some embodiments, the first network element or the terminal device may release the user plane connection between the terminal device and the first network element through a control plane. For example, the first network element may send a user plane connection release command message through the control plane to initiate release of the user plane connection.

In some embodiments of the present disclosure, the above-mentioned user plane connection may be carried by a PDU session.

In some embodiments, the first network element (e.g., LMF) may send user plane information to the terminal device through a downlink non-access stratum transport (DL NAS TRANSPORT) message of the second network element (e.g., AMF), and the user plane information may include an Internet Protocol (IP) address or a fully qualified domain name (FQDN) of the first network element. Optionally, if the first network element sends the FQDN to the terminal device, a domain name system (DNS) server or resolver may be used to resolve the IP address of the first network element. For example, the DNS server may be an edge application server discovery function (EASDF) or a local DNS for local LMF address resolution.

In some embodiments, the terminal device may establish a PDU session for user plane positioning. For example, the terminal device may establish the PDU session according to a UE routing selection policy (User-Defined Routing Service Profile, URSP), and the URSP includes a PDU session parameter related to user plane positioning, such as a dedicated data network name (DNN) and a slice network service access identifier (S-NSSAI).

In some embodiments, the SMF may select, based on the S-NSSAI, DNN, and position information of the terminal device, etc., the third network element (e.g., UPF) to connect to the first network element, so as to establish the above-mentioned PDU session. Optionally, the third network element may be a PDU session anchor (PSA) UPF, and the PSA UPF may be located at a central station or a local station.

In some embodiments, the above-mentioned PDU session may be used to carry the user plane connection between the terminal device and the first network element.

In some embodiments, the terminal device and the first network element may establish one or more user plane connections, and the one or more user plane connections may all be carried by one PDU session.

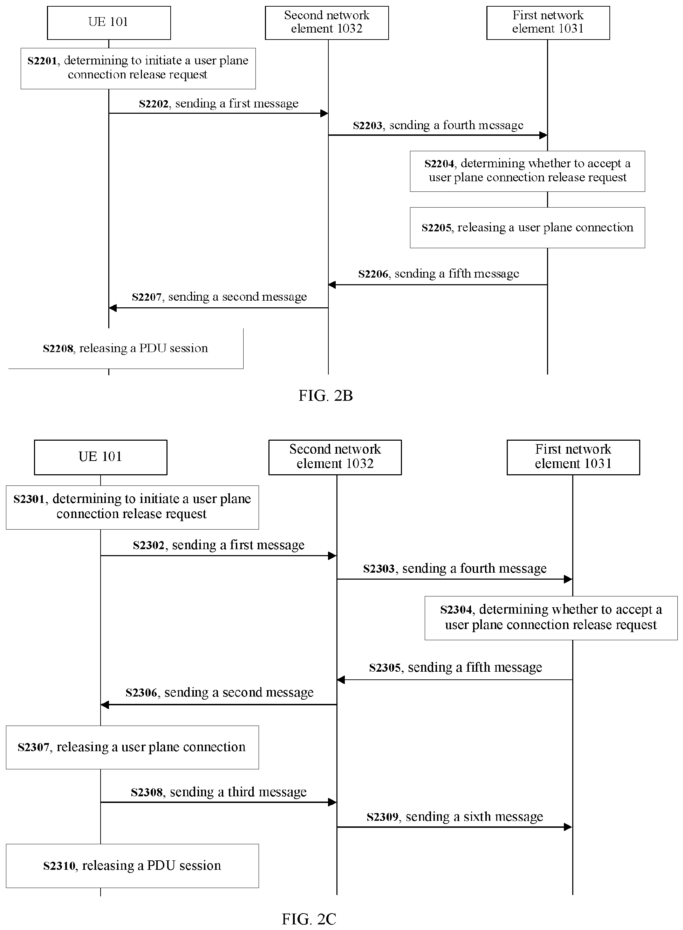

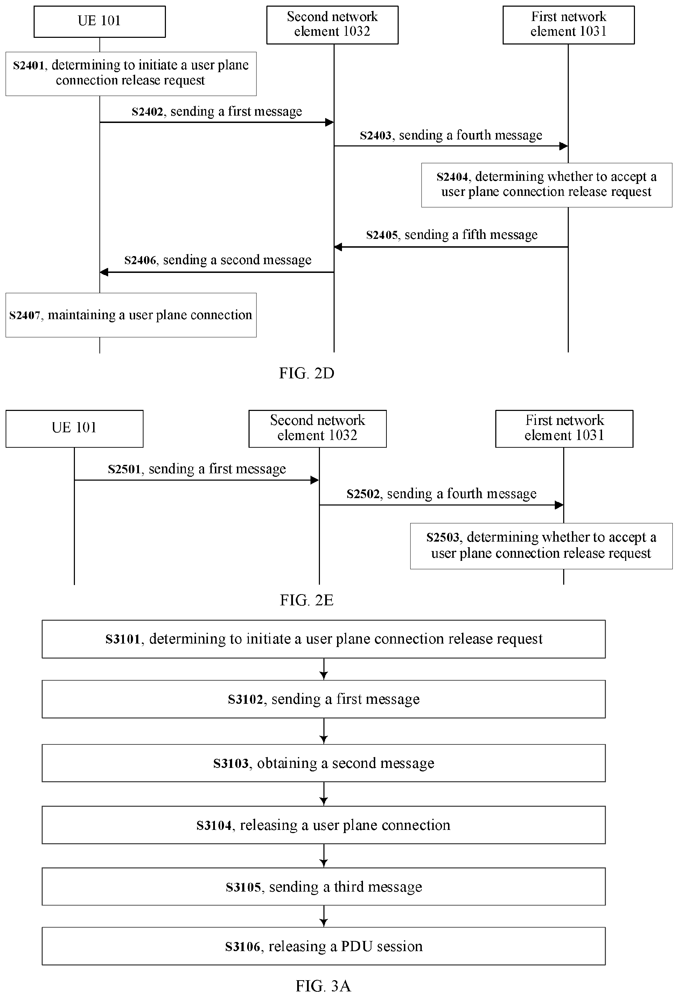

FIG. 2Ais a flowchart of a connection releasing method according to an embodiment of the present disclosure. The connection releasing method may be performed by a communication system. As shown in FIG. 2A, the method may include the following steps.

At step S2101, the UE determines to initiate a user plane connection release request.

In some embodiments, the UE determines whether to initiate the user plane connection release request according to its own state.

For example, the UE may determine to initiate the user plane connection release request in a case where a positioning service ends normally.

For another example, the UE may determine to initiate the user plane connection release request according to an instruction input by a user.

At step S2102, the UE sends a first message to the second network element.

In some embodiments, the second network element may receive the first message. For example, the second network element may receive the first message sent by the UE.

In some embodiments, the second network element is a network element having an access and mobility management function, for example, the second network element may be an AMF.

In some embodiments, the first message may be used to trigger release of the user plane connection, the user plane connection is a connection between the UE and the first network element, the first network element is a network element having a positioning management function or a sensing function, for example, the first network element may be an LMF or an SF.

In some embodiments, the first message may be used to request release of the user plane connection.

In some embodiments, the name of the first message is not limited, for example, it may be "user plane connection release request message", "connection release request message", "positioning connection release request message", etc.

In some embodiments, the first message may include at least one of:
a first message identifier, such as a user plane connection release request message identity;
a user plane connection release cause, which may be used to indicate a reason why the UE releases the user plane connection;
a user plane connection identifier, which may indicate the user plane connection requested to be released;
a UE identifier, which may be used to indicate the UE that triggers release of the user plane connection; or
a first network element identifier, which may be used to indicate the first network element corresponding to the user plane connection.

Optionally, the first network element identifier may be any one of: an IP address of the first network element, a routing identifier (ID) of the first network element, or a correlation ID of the first network element.

Optionally, the UE ID may be used to uniquely identify the UE that triggers the release of the user plane connection. For example, the UE ID may include at least one of a subscription concealed identifier (SUCI), a subscriber permanent identifier (SUPI), a generic public subscription identifier (GPSI), an application layer ID, a globally unique temporary identifier (GUTI), a permanent equipment identifier (PEI), an international mobile equipment identity (IMEI), an international mobile subscriber identity (IMSI), a temporary mobile subscriber identity (TMSI) or a radio network temporary identity (RNTI). The GUTI may be a 5G-GUTI, a 4G-GUTI, or a GUTI under other network standards, which is not limited in the embodiments of the present disclosure.

Optionally, the above-mentioned user plane connection release cause may be a cause agreed upon in the protocol, or a cause determined by the UE according to a scenario triggering the release of the user plane connection.

In some embodiments, the first message may be carried in a non-access stratum (NAS) message or another message sent by the UE to the second network element. Optionally, the first message may be encapsulated in a container of an uplink non-access stratum transport (UL NAS TRANSPORT) message, which may be a user plane positioning connection management information (UPP-CMI) container.

In some embodiments, the UE may send the first message to the second network element through an access network device. Optionally, the access network device only forwards the first message.

In some embodiments, the UE may start a timer. For example, the UE may start the timer when sending the first message. The timer may be used to determine whether a response to the first message (e.g., a second message) is received within a period of time. If the response to the first message is received, the UE may stop the timer. In some embodiments, if the response to the first message is not received before the timer times out, the first message may be resent.

At step S2103, the second network element sends a fourth message to the first network element.

In some embodiments, the first network element may receive the fourth message. For example, the first network element may receive the fourth message sent by the second network element.

In some embodiments, the fourth message may be used to request the first network element to release the user plane connection.

In some embodiments, the fourth message may be used to request the first network element to accept a request, from the UE, for to releasing the user plane connection.

In some embodiments, the name of the fourth message is not limited, for example, it may be "user plane connection release request message", "connection release request message", "positioning connection release request message", etc.

In some embodiments, a content of the fourth message may be the same as that of the first message. For example, the second network element may forward all the content of the first message to the first network element.

In some embodiments, the fourth message may include part of the content of the first message. For example, the second network element may forward part of the content of the first message to the first network element.

In some embodiments, the above-mentioned first message includes a first network element ID, and the second network element may send the fourth message to the first network element corresponding to the first network element ID.

In some embodiments, the fourth message may be carried in an N1 interface message notification (Namf_Communication _N1MessageNotify). For example, the second network element may forward the first message received from the UE in step S2102 to the first network element through Namf_Communication_N1MessageNotify.

At step S2104, the first network element determines whether to accept the user plane connection release request.

In some embodiments, the first network element determines whether to accept the request, from the UE, for releasing the user plane connection.

In some embodiments, the first network element may determine whether to accept or reject the request, from the UE, for releasing the user plane connection based on its own configuration information and/or permission information of the UE.

At step S2105, the first network element releases the user plane connection.

In some embodiments, the first network element may release the user plane connection between the UE and the first network element.

In some embodiments, in a case where the first network element determines to accept the request, from the UE, for releasing the user plane connection, the first network element may release the user plane connection between the UE and the first network element.

In some embodiments, the first network element may determine the user plane connection to be released according to the user plane connection ID.

In some embodiments, the user plane connection may be an IP connection, a TCP connection or a UDP connection. If the user plane connection is a TCP connection, the first network element may complete the release of the TCP connection as an active release party.

In some embodiments, step S2105 is an optional step. For example, if the first network element determines to reject the request, from the UE, for releasing the user plane connection, step S2105 is not executed. For another example, the release of the user plane connection may be performed by the UE, and the first network element may not execute step S2105.

In some embodiments, the first network element executes step S2105 to release the user plane connection, and the UE may also execute step S2108 to release the user plane connection. In this way, the first network element and the UE may each release the user plane connection at their own ends, thereby improving the reliability of connection release.

At step S2106, the first network element sends a fifth message to the second network element.

In some embodiments, the second network element may receive the fifth message. For example, the second network element may receive the fifth message sent by the first network element.

In some embodiments, the fifth message may be a first release message, and the first release message may be used to indicate that the user plane connection has been released by the first network element.

For example, after executing step S2105 to release the user plane connection, the first network element may execute step S2106 to send a first release message to the second network element, for indicating through the first release message that the user plane connection has been released by the first network element.

For another example, the first network element may execute step S2105 and step S2106 in parallel, to release the user plane connection, and send a first release message to the second network element, for indicating through the first release message that the user plane connection has been released by the first network element.

For another example, the first network element may first execute step S2106 to send a first release message to the second network element, and then execute step S2105.

Optionally, the first release message may include a release indication.

Optionally, the name of the first release message is not limited, for example, it may be "user plane connection release response message" or the like.

In some other embodiments, the fifth message may be a second release message, and the second release message may be used to instruct the UE to release the user plane connection.

For example, after the first network element determines in step S2104 that it accepts the user plane connection release request, it may not execute step S2105 but execute step S2106, to send a second release message to the second network element, for instructing through the second release message the UE to release the user plane connection.

Optionally, the second release message may include a release indication.

Optionally, the name of the second release message is not limited, for example, it may be "user plane connection release command message", "user plane connection release instruction message", "user plane connection release acceptance message" and the like.

In some other embodiments, the fifth message may be a rejection message, and the rejection message may be used to reject the UE from releasing the user plane connection.

For example, after the first network element determines in step S2104 to reject the user plane connection release request, it may not execute step S2105 but execute step S2106, to send a rejection message to the second network element, for rejecting through the rejection message the UE from releasing the user plane connection.

Optionally, the rejection message may include a rejection indication and a rejection cause.

Optionally, the name of the rejection message is not limited, for example, it may be "user plane connection release rejection message" or the like.

In some embodiments, the fifth message may be carried in Namf_Communication _N1MessageNotify. For example, the first network element may send the fifth message to the second network element via Namf_Communication_N1MessageNotify.

In some embodiments, the second message may include at least one of:
a user plane connection ID;
a UE ID; or
a first network element ID.

At step S2107, the second network element sends the second message to the UE.

In some embodiments, the UE may receive the second message. For example, the UE may receive the second message sent by the second network element.

In some embodiments, the content indicated by the second message is the same as that of the fifth message mentioned above.

In some embodiments, the second message includes all the content of the fifth message described above.

In some embodiments, the second message includes part of the content of the fifth message mentioned above.

In some embodiments, the fifth message is a first release message, and the second message may be the first release message, and the first release message is used to indicate that the user plane connection has been released by the first network element.

In some embodiments, the fifth message is a second release message, and the second message may be the second release message, and the second release message is used to instruct the UE to release the user plane connection.

In some embodiments, the fifth message is a rejection message, and the second message may be the rejection message, and the rejection message is used to reject the UE from releasing the user plane connection.

In some embodiments, the second message may be carried in a NAS message or another message sent by the second network element to the UE. Optionally, the second message may be encapsulated in a container of a DL NAS TRANSPORT message, which may be a UPP-CMI container.

In some embodiments, the second message may include at least one of:
a user plane connection ID;
a UE ID; or
a first network element ID.

In some embodiments, if the second message received by the UE is the rejection message, the user plane connection may be maintained.

In some embodiments, if the second message received by the UE is the rejection message, the first message may be resent.

In some embodiments, the UE may determine that a first condition is met and resend the first message. Optionally, the UE may resend the first message when determining that the first condition is met. Optionally, the UE may resend the first message after a certain period of time after determining that the first condition is met.

The first condition may include at least one of:
the second message being used to refuse the UE from releasing the user plane connection; or
the second message being not received within a specific time period after the first message is sent.

In some embodiments, the specific time period may be a duration of a timer, for example, the UE may start the timer when sending the first message and stop the timer when receiving the second message. If the second message is not received before the timer times out, the first message may be resent.

At step S2108, the UE releases the user plane connection.

In some embodiments, the UE may release the user plane connection between the UE and the first network element.

In some embodiments, the UE may determine that the received second message is second release indication information, and release the user plane connection. Optionally, the UE may release the user plane connection if it is determined that the second message includes the second release indication information.

In some embodiments, the user plane connection may be an IP connection, a TCP connection or a UDP connection. If the user plane connection is the TCP connection, the UE may complete the release of the TCP connection as the active release party.

In some embodiments, step S2108 is an optional step. For example, in a case where the UE determines that the received second message is not the second release indication information (for example, the first release message or the rejection message), step S2108 may not be executed. For another example, in a case where the UE determines that the received second message is the rejection message, step S2108 is not executed.

In some embodiments, in a case where the UE determines that the received second message is the first release message, the UE may also release the user plane connection. In this way, the first network element and the UE may each release the user plane connection at their own ends, thereby improving the reliability of the connection release.

At step S2109, the UE sends a third message to the second network element.

In some embodiments, the second network element may receive the third message. For example, the second network element may receive the third message sent by the UE.

In some embodiments, the third message may be used to indicate that the user plane connection has been released by the UE.

In some embodiments, the name of the third message is not limited, for example, it may be "user plane connection release completion message", "user plane connection release message", etc.

In some embodiments, the UE may execute step S2109 to send the third message after executing step S2108 to release the user plane connection.

In some embodiments, the UE may not execute step S2109 if it does not execute step S2108.

In some embodiments, the third message may be carried in a NAS message or another message sent by the UE to the second network element. Optionally, the third message may be encapsulated in a container of a UL NAS TRANSPORT message, which may be a UPP-CMI container.

In some embodiments, the third message may include at least one of:
a user plane connection ID;
a UE ID; or
a first network element ID.

At step S2110, the second network element sends a sixth message to the first network element.

In some embodiments, the first network element may receive the sixth message. For example, the first network element may receive the sixth message sent by the second network element.

In some embodiments, the sixth message may be used to indicate that the user plane connection has been released by the UE.

In some embodiments, the sixth message may be used to notify the first network element that the UE has completed the release of the user plane connection.

In some embodiments, the name of the sixth message is not limited, for example, it may be "user plane connection release completion message", "user plane connection release message", etc.

In some embodiments, the content indicated by the sixth message may be the same as that of the third message mentioned above.

In some embodiments, the content of the sixth message may be the same as that of the third message. For example, the second network element may forward all the content of the third message to the first network element.

In some embodiments, the sixth message may include part of the content of the third message. For example, the second network element may forward part of the content of the third message to the first network element.

In some embodiments, if the third message includes the first network element ID, the second network element may send the sixth message to the first network element corresponding to the first network element ID.

In some embodiments, the sixth message may be carried in Namf_Communication _N1MessageNotify. For example, the second network element may forward the third message received from the UE in step S2109 to the first network element via Namf_Communication_N1MessageNotify.

At step S2111, the UE releases a PDU session.

In some embodiments, the UE may determine that there is no other user plane connection between the UE and the first network element, and release the PDU session to which the user plane connection belongs. The PDU session is used to carry the user plane connection between the UE and the first network element.

In some embodiments, the UE may determine that there is no activated user plane connection between the UE and the first network element, and release the PDU session to which the user plane connection belongs.

In some embodiments, the UE may send a PDU session release request to the second network element via a NAS message, and the PDU session release request may include a session ID of the PDU session. The first network element initiates the release of the PDU session in response to the PDU session release request. It should be noted that regarding the specific implementation of release of the PDU session, reference may be made to the description in the relevant technology, which will not be repeated here.

In some embodiments, step S2111 is an optional step. For example, if the UE determines that there are other user plane connections between the UE and the first network element, the PDU session may be maintained.

The method involved in the embodiments of the present disclosure may include at least one of the above steps S2101 to S2111. For example, step S2102 may be implemented as an independent embodiment, step S2103 may be implemented as an independent embodiment, step S2105 may be implemented as an independent embodiment, step S2108 may be implemented as an independent embodiment, steps S2101+S2102 may be implemented as an independent embodiment, step S2102+S2107 may be implemented as an independent embodiment, steps S2101+S2102+S2103+S2104+S2105+S2106+S2107 may be implemented as an independent embodiment, steps S2102+S2103+S2104+S2105+S2106+S2107 may be implemented as an independent embodiment, step S2101+S2102+S2103+S2104+S2106+S2107+S2108 may be implemented as an independent embodiment, steps S2102+S2103+S2104+S2106+S2107+S2108 may be implemented as an independent embodiment, steps S2101+S2102+S2103+S2104+S2106+S2107+S2108+S2109+S2110+S2111 may be implemented as an independent embodiment, and steps S2102+S2103+S2104+S2106+S2107+S2108+S2109+S2110+S2111 may be implemented as an independent embodiment, but the present disclosure is not limited thereto.

In some embodiments, the above steps S2101 to S2111 may be executed in a swapped order or simultaneously.

In some embodiments, the above steps S2101 to S2111 are all optional steps.

In some embodiments, reference may be made to other optional implementations described before or after the specification corresponding to FIG. 2A.

By adopting the above method, the UE may actively trigger the release of the user plane connection through the first message, thereby improving the flexibility of user plane connection management.

FIG. 2B is an interactive schematic diagram of a connection releasing method according to an embodiment of the present disclosure. As shown in FIG. 2B, embodiments relate to the connection releasing method which may be performed by a communication system, and the method may include the following steps.

At step S2201, the UE determines to initiate a user plane connection release request.

Regarding the optional implementation of step S2201, reference may be made to the optional implementation of step S2101 in FIG. 2A and other related parts of the embodiment involved in FIG. 2A, which are not repeated in detail here.

At step S2202, the UE sends a first message to the second network element.

Regarding the optional implementation of step S2202, reference may be made to the optional implementation of step S2102 in FIG. 2A and other related parts of the embodiment involved in FIG. 2A, which are not repeated in detail here.

At step S2203, the second network element sends a fourth message to the first network element.

Regarding the optional implementation of step S2203, reference may be made to the optional implementation of step S2103 in FIG. 2A and other related parts of the embodiment involved in FIG. 2A, which are not repeated in detail here.

At step S2204, the first network element determines whether to accept the user plane connection release request.

Regarding the optional implementation of step S2204, reference may be made to the optional implementation of step S2104 in FIG. 2A and other related parts of the embodiment involved in FIG. 2A, which are not repeated in detail here.

At step S2205, the first network element releases the user plane connection.

Regarding the optional implementation of step S2205, reference may be made to the optional implementation of step S2105 in FIG. 2A and other related parts of the embodiment involved in FIG. 2A, which are not repeated in detail here.

At step S2206, the first network element sends a fifth message to the second network element.

Regarding the optional implementation of step S2206, reference may be made to the optional implementation of step S2106 in FIG. 2A and other related parts of the embodiment involved in FIG. 2A, which are not repeated in detail here.

At step S2207, the second network element sends the second message to the UE.

Regarding the optional implementation of step S2207, reference may be made to the optional implementation of step S2107 in FIG. 2A and other related parts of the embodiment involved in FIG. 2A, which are not repeated in detail here.

At step S2208, the UE releases a PDU session.

Regarding the optional implementation of step S2208, reference may be made to the optional implementation of step S2111 in FIG. 2A and other related parts of the embodiment involved in FIG. 2A, which are not repeated in detail here.

In some embodiments, the above steps are all optional steps.

In some embodiments, the embodiment shown in FIG. 2B may also be combined with any one or more steps in the embodiment shown in FIG. 2A as a new embodiment.

FIG. 2C is an interactive schematic diagram of a connection releasing method according to an embodiment of the present disclosure. As shown in FIG. 2C, embodiments relate to the connection releasing method which may be performed by a communication system, and the method may include the following steps.

At step S2301, the UE determines to initiate a user plane connection release request.

Regarding the optional implementation of step S2301, reference may be made to the optional implementation of step S2101 in FIG. 2A and other related parts of the embodiment involved in FIG. 2A, which are not repeated in detail here.

At step S2302, the UE sends a first message to the second network element.

Regarding the optional implementation of step S2302, reference may be made to the optional implementation of step S2102 in FIG. 2A and other related parts of the embodiment involved in FIG. 2A, which are not repeated in detail here.

At step S2303, the second network element sends a fourth message to the first network element.

Regarding the optional implementation of step S2303, reference may be made to the optional implementation of step S2103 in FIG. 2A and other related parts of the embodiment involved in FIG. 2A, which are not repeated in detail here.

At step S2304, the first network element determines whether to accept the user plane connection release request.

Regarding the optional implementation of step S2304, reference may be made to the optional implementation of step S2104 in FIG. 2A and other related parts of the embodiment involved in FIG. 2A, which are not repeated in detail here.

At step S2305, the first network element sends a fifth message to the second network element.

Regarding the optional implementation of step S2305, reference may be made to the optional implementation of step S2106 in FIG. 2A and other related parts of the embodiment involved in FIG. 2A, which are not repeated in detail here.

In some embodiments, the fifth message may be second release indication information.

At step S2306, the second network element sends the second message to the UE.

Regarding the optional implementation of step S2306, reference may be made to the optional implementation of step S2107 in FIG. 2A and other related parts of the embodiment involved in FIG. 2A, which are not repeated in detail here.

At step S2307, the UE releases the user plane connection.

Regarding the optional implementation of step S2307, reference may be made to the optional implementation of step S2108 in FIG. 2A and other related parts of the embodiment involved in FIG. 2A, which are not repeated in detail here.

At step S2308, the UE sends a third message to the second network element.

Regarding the optional implementation of step S2308, reference may be made to the optional implementation of step S2109 in FIG. 2A and other related parts of the embodiment involved in FIG. 2A, which are not repeated in detail here.

At step S2309, the second network element sends a sixth message to the first network element.

Regarding the optional implementation of step S2309, reference may be made to the optional implementation of step S2110 in FIG. 2A and other related parts of the embodiment involved in FIG. 2A, which are not repeated in detail here.

At step S2310, the UE releases a PDU session.

Regarding the optional implementation of step S2310, reference may be made to the optional implementation of step S2111 in FIG. 2A and other related parts of the embodiment involved in FIG. 2A, which are not repeated in detail here.

In some embodiments, the above steps are all optional steps.

In some embodiments, the embodiment shown in FIG. 2C may also be combined with any one or more steps in the embodiment shown in FIG. 2A as a new embodiment.

FIG. 2D is an interactive schematic diagram of a connection releasing method according to an embodiment of the present disclosure. As shown in FIG. 2D, embodiments relate to the connection releasing method which may be performed by a communication system, and the method may include the following steps.

At step S2401, the UE determines to initiate a user plane connection release request.

Regarding the optional implementation of step S2401, reference may be made to the optional implementation of step S2101 in FIG. 2A and other related parts of the embodiment involved in FIG. 2A, which are not repeated in detail here.

At step S2402, the UE sends a first message to the second network element.

Regarding the optional implementation of step S2402, reference may be made to the optional implementation of step S2102 in FIG. 2A and other related parts of the embodiment involved in FIG. 2A, which are not repeated in detail here.

At step S2403, the second network element sends a fourth message to the first network element.

Regarding the optional implementation of step S2403, reference may be made to the optional implementation of step S2103 in FIG. 2A and other related parts of the embodiment involved in FIG. 2A, which are not repeated in detail here.

At step S2404, the first network element determines whether to accept the user plane connection release request.

Regarding the optional implementation of step S2404, reference may be made to the optional implementation of step S2104 in FIG. 2A and other related parts of the embodiment involved in FIG. 2A, which are not repeated in detail here.

At step S2405, the first network element sends a fifth message to the second network element.

Regarding the optional implementation of step S2405, reference may be made to the optional implementation of step S2106 in FIG. 2A and other related parts of the embodiment involved in FIG. 2A, which are not repeated in detail here.

In some embodiments, the fifth message may be a rejection message.

At step S2406, the second network element sends a second message to the UE.

Regarding the optional implementation of step S2406, reference may be made to the optional implementation of step S2107 in FIG. 2A and other related parts of the embodiment involved in FIG. 2A, which are not repeated in detail here.

At step S2407, the UE maintains the user plane connection.

In some embodiments, the above steps are all optional steps.

In some embodiments, the embodiment shown in FIG. 2D may also be combined with any one or more steps in the embodiment shown in FIG. 2A as a new embodiment.

FIG. 2E is an interactive schematic diagram of a connection releasing method according to an embodiment of the present disclosure. As shown in FIG. 2E, embodiments relate to the connection releasing method which may be performed by a communication system, and the method may include the following steps.

At step S2501, the UE sends a first message to the second network element.

Regarding the optional implementation of step S2501, reference may be made to the optional implementation of step S2102 in FIG. 2A and other related parts of the embodiment involved in FIG. 2A, which are not repeated in detail here.

At step S2502, the second network element sends a fourth message to the first network element.

Regarding the optional implementation of step S2502, reference may be made to the optional implementation of step S2103 in FIG. 2A and other related parts of the embodiment involved in FIG. 2A, which are not repeated in detail here.

At step S2503, the first network element determines whether to accept a user plane connection release request.

Regarding the optional implementation of step S2503, reference may be made to the optional implementation of step S2104 in FIG. 2A and other related parts of the embodiment involved in FIG. 2A, which are not repeated in detail here.

In some embodiments, the above steps are all optional steps.

In some embodiments, the embodiment shown in FIG. 2E may also be combined with any one or more steps in the embodiment shown in FIG. 2A as a new embodiment.

FIG. 3A is a flowchart of a connection releasing method according to an embodiment of the present disclosure. As shown in FIG. 3A, embodiments relate to the connection releasing method which may be performed by a UE, and the method may include the following steps.

At step S3101, it is determined to initiate a user plane connection release request.

Regarding the optional implementation of step S3101, reference may be made to the optional implementation of step S2101 in FIG. 2A and other related parts of the embodiment involved in FIG. 2A, which are not repeated in detail here.

At step S3102, a first message is sent.

Regarding the optional implementation of step S3102, reference may be made to the optional implementation of step S2102 in FIG. 2A and other related parts of the embodiment involved in FIG. 2A, which are not repeated in detail here.

In some embodiments, the UE may send the first message to a second network element, which is not limited in the present disclosure, the UE may also send the first message to other entities.

At step S3103, a second message is obtained.

Regarding the optional implementation of step S3103, reference may be made to the optional implementation of step S2107 in FIG. 2A and other related parts of the embodiment involved in FIG. 2A, which are not repeated in detail here.

In some embodiments, the UE may receive the second message sent by the second network element, but the present disclosure is not limited thereto, and the UE may also receive the second message sent by other entities.

In some embodiments, the UE may obtain the second message specified by a protocol.

In some embodiments, the UE may obtain the second message from an upper layer(s).

In some embodiments, the UE may perform processing to obtain the second message.

At step S3104, the user plane connection is released.

Regarding the optional implementation of step S3104, reference may be made to the optional implementation of step S2108 in FIG. 2A and other related parts of the embodiment involved in FIG. 2A, which are not repeated in detail here.

At step S3105, a third message is sent.

Regarding the optional implementation of step S3105, reference may be made to the optional implementation of step S2109 in FIG. 2A and other related parts of the embodiment involved in FIG. 2A, which are not repeated in detail here.

In some embodiments, the UE may send the third message to the second network element, but the present disclosure is not limited thereto, the UE may also send the third message to other entities.

At step S3106, a PDU session is released.

Regarding the optional implementation of step S3106, reference may be made to the optional implementation of step S2111 in FIG. 2A and other related parts of the embodiment involved in FIG. 2A, which are not repeated in detail here.

The method involved in the embodiments of the present disclosure may include at least one of the above steps S3101 to S3106. For example, step S3102 may be implemented as an independent embodiment, step S3103 may be implemented as an independent embodiment, step S3104 may be implemented as an independent embodiment, steps S3101+S3102 may be implemented as an independent embodiment, step S3102+S3103 may be implemented as an independent embodiment, steps S3102+S3103+S3104 may be implemented as an independent embodiment, steps S3102+S3103+S3104+S3105 may be implemented as an independent embodiment, step S3102+S3103+S3104+S3106 may be implemented as an independent embodiment, and steps S3102+S3103+S3104+S3105+S3106 may be implemented as an independent embodiment, but the present disclosure is not limited thereto.

In some embodiments, the above steps S3101 to S3106 may be executed in a swapped order or simultaneously.

In some embodiments, the above steps S3101 to S3106 are all optional steps.

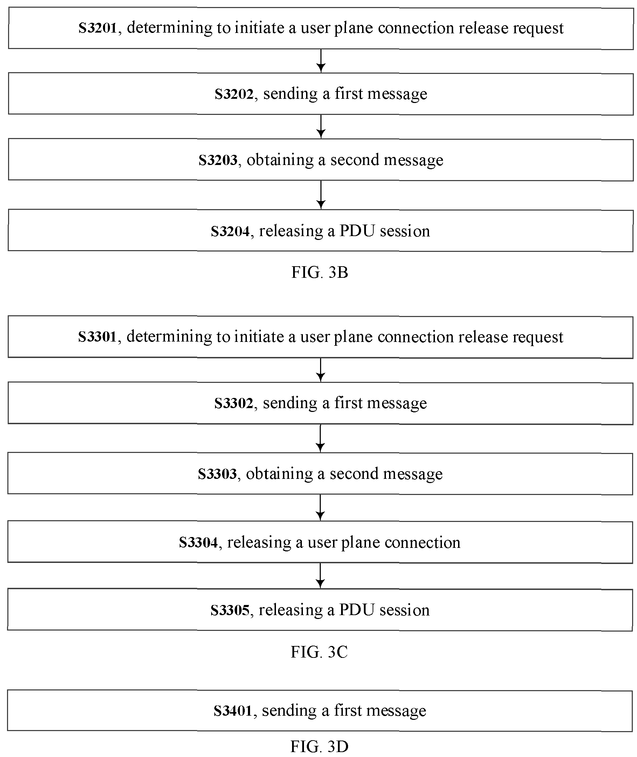

FIG. 3B is a flowchart of a connection releasing method according to an embodiment of the present disclosure. As shown in FIG. 3B, embodiments relate to the connection releasing method which may be performed by a UE, and the method may include the following steps.

At step S3201, it is determined to initiate a user plane connection release request.

Regarding the optional implementation of step S3201, reference may be made to the optional implementations of step S2101 in FIG. 2A and step S3101 in FIG. 3A, and other related parts of the embodiments involved in FIG. 2A and FIG. 3A, which are not repeated in detail here.

At step S3202, a first message is sent.

Regarding the optional implementation of step S3202, reference may be made to the optional implementations of step S2102 in FIG. 2A and step S3102 in FIG. 3A, and other related parts of the embodiments involved in FIG. 2A and FIG. 3A, which are not repeated in detail here.

At step S3203, a second message is obtained.

Regarding the optional implementation of step S3203, reference may be made to the optional implementations of step S2107 in FIG. 2A and step S3103 in FIG. 3A, and other related parts of the embodiments involved in FIG. 2A and FIG. 3A, which are not repeated in detail here.

At step S3204, a PDU session is released.

Regarding the optional implementation of step S3204, reference may be made to the optional implementations of step S2111 in FIG. 2A and step S3106 in FIG. 3A, and other related parts of the embodiments involved in FIG. 2A and FIG. 3A, which are not repeated in detail here.

In some embodiments, the above steps are all optional steps.

In some embodiments, the embodiment shown in FIG. 3B may also be combined with any one or more steps in the embodiment shown in FIG. 3A as a new embodiment.

FIG. 3C is a flowchart of a connection releasing method according to an embodiment of the present disclosure. As shown in FIG. 3C, embodiments relate to the connection releasing method which may be performed by a UE, and the method may include the following steps.

At step S3301, it is determined to initiate a user plane connection release request.

Regarding the optional implementation of step S3301, reference may be made to the optional implementations of step S2101 in FIG. 2A and step S3101 in FIG. 3A, and other related parts of the embodiments involved in FIG. 2A and FIG. 3A, which are not repeated in detail here.

At step S3302, a first message is sent.

Regarding the optional implementation of step S3302, reference may be made to the optional implementations of step S2102 in FIG. 2A and step S3102 in FIG. 3A, and other related parts of the embodiments involved in FIG. 2A and FIG. 3A, which are not repeated in detail here.

At step S3303, a second message is obtained.

Regarding the optional implementation of step S3303, reference may be made to the optional implementations of step S2107 in FIG. 2A and step S3103 in FIG. 3A, and other related parts of the embodiments involved in FIG. 2A and FIG. 3A, which are not repeated in detail here.

At step S3304, the user plane connection is released.

Regarding the optional implementation of step S3304, reference may be made to the optional implementations of step S2108 in FIG. 2A and step S3104 in FIG. 3A, and other related parts of the embodiments involved in FIG. 2A and FIG. 3A, which are not repeated in detail here.

At step S3305, a PDU session is released.

Regarding the optional implementation of step S3305, reference may be made to the optional implementations of step S2111 in FIG. 2A and step S3106 in FIG. 3A, and other related parts of the embodiments involved in FIG. 2A and FIG. 3A, which are not repeated in detail here.

In some embodiments, the above steps are all optional steps.

**In** some embodiments, the embodiment shown in FIG. 3C may also be combined with any one or more steps in the embodiment shown in FIG. 3A as a new embodiment.

FIG. 3D is a flowchart of a connection releasing method according to an embodiment of the present disclosure. As shown in FIG. 3D, embodiments relate to the connection releasing method which may be performed by a UE, and the method may include the following steps.

At step S3401, a first message is sent.

Regarding the optional implementation of step S3401, reference may be made to the optional implementations of step S2102 in FIG. 2A and step S3102 in FIG. 3A, and other related parts of the embodiments involved in FIG. 2A and FIG. 3A, which are not repeated in detail here.

In some embodiments, the embodiment shown in FIG. 3D may also be combined with any one or more steps in the embodiment shown in FIG. 3A as a new embodiment.

In some embodiments, the first message is used to trigger release of a user plane connection, the user plane connection is a connection between the UE and a first network element, the first network element is a network element having a positioning management function or a sensing function.

In some embodiments, the first message includes at least one of:
a first message identifier (ID);
a user plane connection release cause;
a user plane connection ID;
a UE ID; or
a first network element ID.

In some embodiments, the method further includes:
receiving a second message sent by a second network element, in which the second message is any one of:
a first release message, in which the first release message indicates that the user plane connection has been released by the first network element;
a second release message, in which the second release message instructs the UE to release the user plane connection; or
a rejection message, in which the rejection message is used to reject the UE from releasing the user plane connection.

In some embodiments, the second message includes at least one of:
a user plane connection ID;
a UE ID; or
a first network element ID.

In some embodiments, the method further includes:
determining that the second message is second release indication information; and
releasing the user plane connection.

In some embodiments, the method further includes:
sending a third message to the second network element, in which the third message indicates that the user plane connection is already released by the UE.

In some embodiments, the method further includes:
determining that there is no other user plane connection between the UE and the first network element; and
releasing a packet data unit (PDU) session to which the user plane connection belongs, in which the PDU session is used to carry the user plane connection between the UE and the first network element.

In some embodiments, the method further includes:
determining that a first condition is met; and
resending the first message;

in which the first condition includes at least one of:
the second message being used to reject the UE from releasing the user plane connection; or
the second message being not received within a specific time period after the first message is sent.

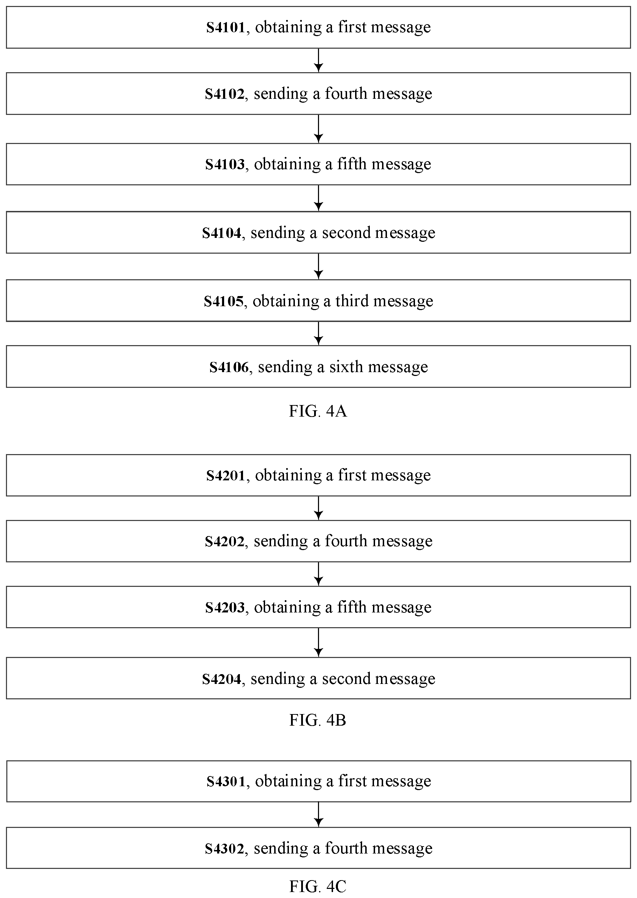

FIG. 4A is a flowchart of a connection releasing method according to an embodiment of the present disclosure. As shown in FIG. 4A, embodiments relate to the connection releasing method which may be performed by a second network element, and the method may include the following steps.

At step S4101, a first message is obtained.

Regarding the optional implementation of step S4101, reference may be made to the optional implementation of step S2102 in FIG. 2A and other related parts of the embodiment involved in FIG. 2A, which are not repeated in detail here.

In some embodiments, the second network element may receive the first message sent by a UE, but the present disclosure is not limited thereto, the second network element may also receive the first message sent by other entities.

In some embodiments, the second network element may obtain the first message specified by a protocol.

In some embodiments, the second network element may perform processing to obtain the first message.

At step S4102, a fourth message is sent.

Regarding the optional implementation of step S4102, reference may be made to the optional implementation of step S2103 in FIG. 2A and other related parts of the embodiment involved in FIG. 2A, which are not repeated in detail here.

In some embodiments, the second network element may send the fourth message to a first network element, but the present disclosure is not limited thereto, the second network element may also send the fourth message to other entities.

At step S4103, a fifth message is obtained.

Regarding the optional implementation of step S4103, reference may be made to the optional implementation of step S2106 in FIG. 2A and other related parts of the embodiment involved in FIG. 2A, which are not repeated in detail here.

In some embodiments, the second network element may receive the fifth message sent by the first network element, but the present disclosure is not limited thereto, the second network element may also receive the fifth message sent by other entities.

In some embodiments, the second network element may obtain the fifth message specified by a protocol.

In some embodiments, the second network element may perform processing to obtain the fifth message.

At step S4104, a second message is sent.

Regarding the optional implementation of step S4104, reference may be made to the optional implementation of step S2107 in FIG. 2A and other related parts of the embodiment involved in FIG. 2A, which are not repeated in detail here.

In some embodiments, the second network element may send the second message to the UE, but the present disclosure is not limited thereto, the second network element may also send the second message to other entities.

At step S4105, a third message is obtained.

Regarding the optional implementation of step S4105, reference may be made to the optional implementation of step S2109 in FIG. 2A and other related parts of the embodiment involved in FIG. 2A, which are not repeated in detail here.

In some embodiments, the second network element may receive the third message sent by the first network element, but the present disclosure is not limited thereto, the second network element may also receive the third message sent by other entities.

In some embodiments, the second network element may obtain the third message specified by a protocol.

In some embodiments, the second network element may perform processing to obtain the third message.

At step S4106, a sixth message is sent.

Regarding the optional implementation of step S4106, reference may be made to the optional implementation of step S2110 in FIG. 2A and other related parts of the embodiment involved in FIG. 2A, which are not repeated in detail here.

In some embodiments, the second network element may send the sixth message to the first network element, but the present disclosure is not limited thereto, the second network element may also send the sixth message to other entities.

The method involved in the embodiments of the present disclosure may include at least one of the above steps S4101 to S4106. For example, step S4102 may be implemented as an independent embodiment, step S4103 may be implemented as an independent embodiment, steps S4101+S4102 may be implemented as an independent embodiment, steps S4103+S4104 may be implemented as an independent embodiment, steps S4101+S4102+S4103+S4104 may be implemented as an independent embodiment, and steps S4103+S4104+S4105+S4106 may be implemented as an independent embodiment, but the present disclosure is not limited thereto.

In some embodiments, the above steps S4101 to S4106 may be executed in a swapped order or simultaneously.

In some embodiments, the above steps S4101 to S4106 are all optional steps.

FIG. 4B is an interactive schematic diagram of a connection releasing method according to an embodiment of the present disclosure. As shown in FIG. 4B, embodiments relate to the connection releasing method which may be performed by a second network element, and the method may include the following steps.

At step S4201, a first message is obtained.

Regarding the optional implementation of step S4201, reference may be made to the optional implementations of step S2102 in FIG. 2A and step S4101 in FIG. 4A, and other related parts of the embodiments involved in FIG. 2A and FIG. 4A, which are not repeated in detail here.

At step S4202, a fourth message is sent.

Regarding the optional implementation of step S4202, reference may be made to the optional implementations of step S2103 in FIG. 2A and step S4102 in FIG. 4A, and other related parts of the embodiments involved in FIG. 2A and FIG. 4A, which are not repeated in detail here.

At step S4203, a fifth message is obtained.

Regarding the optional implementation of step S4203, reference may be made to the optional implementations of step S2106 in FIG. 2A and step S4103 in FIG. 4A, and other related parts of the embodiments involved in FIG. 2A and FIG. 4A, which are not repeated in detail here.

At step S4204, a second message is sent.

Regarding the optional implementation of step S4204, reference may be made to the optional implementations of step S2107 in FIG. 2A and step S4104 in FIG. 4A, and other related parts of the embodiments involved in FIG. 2A and FIG. 4A, which are not repeated in detail here.

In some embodiments, the above steps are all optional steps.

In some embodiments, the embodiment shown in FIG. 4B may also be combined with any one or more steps in the embodiment shown in FIG. 4A as a new embodiment.

FIG. 4C is an interactive schematic diagram of a connection releasing method according to an embodiment of the present disclosure. As shown in FIG. 4C, embodiments relate to the connection releasing method which may be performed by a second network element, and the method may include the following steps.

At step S4301, a first message is obtained.

Regarding the optional implementation of step S4301, reference may be made to the optional implementations of step S2102 in FIG. 2A and step S4101 in FIG. 4A, and other related parts of the embodiments involved in FIG. 2A and FIG. 4A, which are not repeated in detail here.

In some embodiments, the first message is used to trigger release of a user plane connection, the user plane connection is a connection between a UE and a first network element, the first network element is a network element having a positioning management function or a sensing function.

At step S4302, a fourth message is sent.

Regarding the optional implementation of step S4302, reference may be made to the optional implementations of step S2103 in FIG. 2A and step S4102 in FIG. 4A, and other related parts of the embodiments involved in FIG. 2A and FIG. 4A, which are not repeated in detail here.

In some embodiments, the fourth message is used to request the first network element to release the user plane connection.

In some embodiments, the above steps are all optional steps.

In some embodiments, the embodiment shown in FIG. 4C may also be combined with any one or more steps in the embodiment shown in FIG. 4A as a new embodiment.

In some embodiments, the first message includes at least one of:
a first message identifier (ID);
a user plane connection release cause;
a user plane connection ID;
a UE ID; or
a first network element ID.

In some embodiments, the first message includes the first network element ID, and sending the fourth message to the first network element includes:
sending the fourth message to a first network element corresponding to the first network element ID.

In some embodiments, the method further includes:
receiving a fifth message sent by the first network element, in which the fifth message is any one of:
a first release message, in which the first release message indicates that the user plane connection has been released by the first network element;
a second release message, in which the second release message instructs the UE to release the user plane connection; or
a rejection message, in which the rejection message is used to reject the UE from releasing the user plane connection.

In some embodiments, the fifth message includes at least one of:
a user plane connection ID;
a UE ID; or
a first network element ID.

In some embodiments, the method further includes:
sending a second message to the UE, in which a content indicated by the second message is the same as that of the fifth message.

In some embodiments, the method further includes:
receiving a third message sent by the UE, in which the third message indicates that the user plane connection is already released by the UE; and
sending a sixth message to the first network element, in which a content indicated by the sixth message is the same as that of the third message.

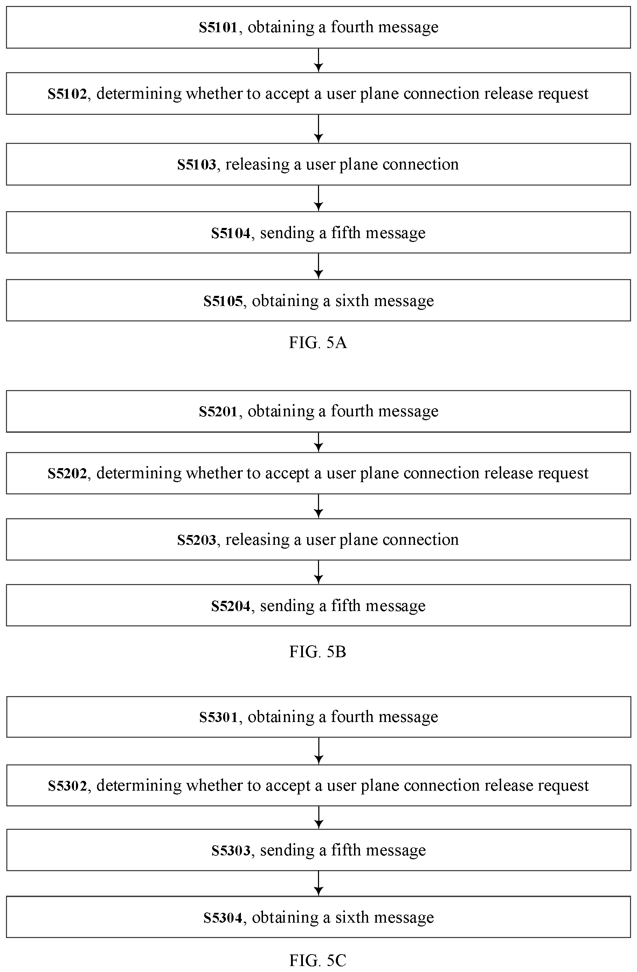

FIG. 5A is a flowchart of a connection releasing method according to an embodiment of the present disclosure. As shown in FIG. 5A, embodiments relate to the connection releasing method which may be performed by a first network element, and the method may include the following steps.

At step S5101, a fourth message is obtained.

Regarding the optional implementation of step S5101, reference may be made to the optional implementation of step S2103 in FIG. 2A and other related parts of the embodiment involved in FIG. 2A, which are not repeated in detail here.

In some embodiments, the first network element may receive the fourth message sent by the second network element, but the present disclosure is not limited thereto, the first network element may also receive the fourth message sent by other entities.

At step S5102, it is determined whether to accept a user plane connection release request.

Regarding the optional implementation of step S5102, reference may be made to the optional implementation of step S2104 in FIG. 2A and other related parts of the embodiment involved in FIG. 2A, which are not repeated in detail here.

At step S5103, a user plane connection is released.

Regarding the optional implementation of step S5103, reference may be made to the optional implementation of step S2105 in FIG. 2A and other related parts of the embodiment involved in FIG. 2A, which are not repeated in detail here.

At step S5104, a fifth message is sent.

Regarding the optional implementation of step S5104, reference may be made to the optional implementation of step S2106 in FIG. 2A and other related parts of the embodiment involved in FIG. 2A, which are not repeated in detail here.

In some embodiments, the first network element may send the fifth message to the second network element, but the present disclosure is not limited thereto, the first network element may also send the fifth message to other entities.

At step S5105, a sixth message is obtained.

Regarding the optional implementation of step S5105, reference may be made to the optional implementation of step S2110 in FIG. 2A and other related parts of the embodiment involved in FIG. 2A, which are not repeated in detail here.

In some embodiments, the first network element may receive the sixth message sent by the second network element, but the present disclosure is not limited thereto, the first network element may also receive the sixth message sent by other entities.

The method involved in the embodiments of the present disclosure may include at least one of the above steps S5101 to S5105. For example, step S5103 may be implemented as an independent embodiment, step S5105 may be implemented as an independent embodiment, step steps S5101+S5103 may be implemented as an independent embodiment, step S5102+S5102 may be implemented as an independent embodiment, steps S5101+S5102+S5103+S5104 may be implemented as an independent embodiment, and steps S5101+S5102+S5104+S5105 may be implemented as an independent embodiment, but the present disclosure is not limited thereto.

In some embodiments, the above steps S5101 to S5105 may be executed in a swapped order or simultaneously.

In some embodiments, the above steps S5101 to S5105 are all optional steps.

FIG. 5B is an interactive schematic diagram of a connection releasing method according to an embodiment of the present disclosure. As shown in FIG. 5B, embodiments relate to the connection releasing method which may be performed by a first network element, and the method may include the following steps.

At step S5201, a fourth message is obtained.

Regarding the optional implementation of step S5201, reference may be made to the optional implementations of step S2103 in FIG. 2A and step S5101 in FIG. 5A, and other related parts of the embodiments involved in FIG. 2A and FIG. 5A, which are not repeated in detail here.

At step S5202, it is determined whether to accept a user plane connection release request.

Regarding the optional implementation of step S5202, reference may be made to the optional implementations of step S2104 in FIG. 2A and step S5102 in FIG. 5A, and other related parts of the embodiments involved in FIG. 2A and FIG. 5A, which are not repeated in detail here.

At step S5203, a user plane connection is released.

Regarding the optional implementation of step S5203, reference may be made to the optional implementations of step S2105 in FIG. 2A and step S5103 in FIG. 5A, and other related parts of the embodiments involved in FIG. 2A and FIG. 5A, which are not repeated in detail here.

At step S5204, a fifth message is sent.

Regarding the optional implementation of step S5204, reference may be made to the optional implementations of step S2106 in FIG. 2A and step S5104 in FIG. 5A, and other related parts of the embodiments involved in FIG. 2A and FIG. 5A, which are not repeated in detail here.

In some embodiments, the above steps are all optional steps.

In some embodiments, the embodiment shown in FIG. 5B may also be combined with any one or more steps in the embodiment shown in FIG. 5A as a new embodiment.

FIG. 5C is an interactive schematic diagram of a connection releasing method according to an embodiment of the present disclosure. As shown in FIG. 5C, embodiments relate to the connection releasing method which may be performed by a first network element, and the method may include the following steps.

At step S5301, a fourth message is obtained.

Regarding the optional implementation of step S5301, reference may be made to the optional implementations of step S2103 in FIG. 2A and step S5101 in FIG. 5A, and other related parts of the embodiments involved in FIG. 2A and FIG. 5A, which are not repeated in detail here.

At step S5302, it is determined whether to accept a user plane connection release request.

Regarding the optional implementation of step S5302, reference may be made to the optional implementations of step S2104 in FIG. 2A and step S5102 in FIG. 5A, and other related parts of the embodiments involved in FIG. 2A and FIG. 5A, which are not repeated in detail here.

At step S5303, a fifth message is sent.

Regarding the optional implementation of step S5303, reference may be made to the optional implementations of step S2106 in FIG. 2A and step S5104 in FIG. 5A, and other related parts of the embodiments involved in FIG. 2A and FIG. 5A, which are not repeated in detail here.

At step S5304, a sixth message is obtained.

Regarding the optional implementation of step S5304, reference may be made to the optional implementations of step S2110 in FIG. 2A and step S5105 in FIG. 5A, and other related parts of the embodiments involved in FIG. 2A and FIG. 5A, which are not repeated in detail here.

In some embodiments, the above steps are all optional steps.

In some embodiments, the embodiment shown in FIG. 5C may also be combined with any one or more steps in the embodiment shown in FIG. 5A as a new embodiment.

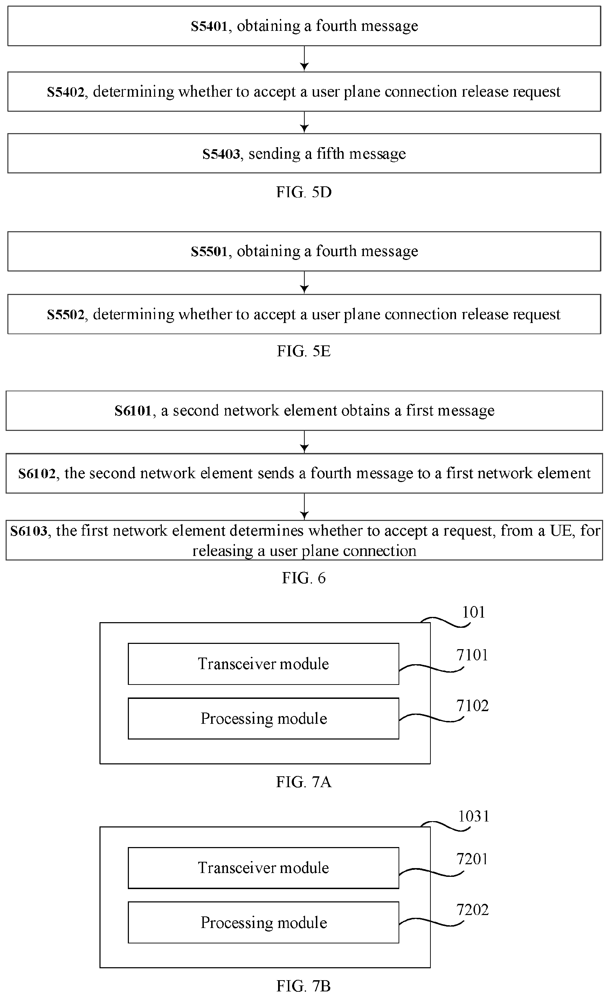

FIG. 5D is an interactive schematic diagram of a connection releasing method according to an embodiment of the present disclosure. As shown in FIG. 5D, embodiments relate to the connection releasing method which may be performed by a first network element, and the method may include the following steps.

At step S5401, a fourth message is obtained.

Regarding the optional implementation of step S5401, reference may be made to the optional implementations of step S2103 in FIG. 2A and step S5101 in FIG. 5A, and other related parts of the embodiments involved in FIG. 2A and FIG. 5A, which are not repeated in detail here.

At step S5402, it is determined whether to accept a user plane connection release request.

Regarding the optional implementation of step S5402, reference may be made to the optional implementations of step S2104 in FIG. 2A and step S5102 in FIG. 5A, and other related parts of the embodiments involved in FIG. 2A and FIG. 5A, which are not repeated in detail here.

At step S5403, a fifth message is sent.

Regarding the optional implementation of step S5403, reference may be made to the optional implementations of step S2106 in FIG. 2A and step S5104 in FIG. 5A, and other related parts of the embodiments involved in FIG. 2A and FIG. 5A, which are not repeated in detail here.

In some embodiments, the above steps are all optional steps.

In some embodiments, the embodiment shown in FIG. 5D may also be combined with any one or more steps in the embodiment shown in FIG. 5A as a new embodiment.

FIG. 5E is an interactive schematic diagram of a connection releasing method according to an embodiment of the present disclosure. As shown in FIG. 5E, embodiments relate to the connection releasing method which may be performed by a first network element, and the method may include the following steps.

At step S5501, a fourth message is obtained.

Regarding the optional implementation of step S5501, reference may be made to the optional implementations of step S2103 in FIG. 2A and step S5101 in FIG. 5A, and other related parts of the embodiments involved in FIG. 2A and FIG. 5A, which are not repeated in detail here.

In some embodiments, the fourth message is used to request the first network element to release a user plane connection, the user plane connection is a connection between a UE and the first network element.

At step S5502, it is determined whether to accept a user plane connection release request.

Regarding the optional implementation of step S5502, reference may be made to the optional implementations of step S2104 in FIG. 2A and step S5102 in FIG. 5A, and other related parts of the embodiments involved in FIG. 2A and FIG. 5A, which are not repeated in detail here.

In some embodiments, the above steps are all optional steps.

In some embodiments, the embodiment shown in FIG. 5E may also be combined with any one or more steps in the embodiment shown in FIG. 5A as a new embodiment.

In some embodiments, the fourth message includes at least one of:
a first message identifier (ID);
a user plane connection release cause;
a user plane connection ID;
a UE ID; or
a first network element ID.

In some embodiments, the method further includes:
sending a fifth message to the second network element, in which the fifth message includes any one of:
first release indication information, in which the first release indication information indicates that the user plane connection is already released by the first network element;
second release indication information, in which the second release indication information instructs the UE to release the user plane connection; or
rejection information, in which the rejection information is used to reject the UE from releasing the user plane connection.

In some embodiments, the method further includes:
releasing the user plane connection between the UE and the first network element.
In some embodiments, the method further includes:
receiving a sixth message sent by the second network element, in which the sixth message indicates that the user plane connection is already released by the UE.

FIG. 6 is a flowchart of a connection releasing method according to an embodiment of the present disclosure. As shown in FIG. 6, embodiments relate to the connection releasing method which may be performed by a core network device, and the method may include the following steps.

At step S6101, a second network element obtains a first message.

Regarding the optional implementation of step S6101, reference may be made to the optional implementation of step S2102 in FIG. 2A and other related parts of the embodiment involved in FIG. 2A, which are not repeated in detail here.

At step S6102, the second network element sends a fourth message to a first network element.

Regarding the optional implementation of step S6102, reference may be made to the optional implementation of step S2103 in FIG. 2A and other related parts of the embodiment involved in FIG. 2A, which are not repeated in detail here.

At step S6103, the first network element determines whether to accept a request, from a UE, for releasing a user plane connection.

Regarding the optional implementation of step S6103, reference may be made to the optional implementation of step S2104 in FIG. 2A and other related parts of the embodiment involved in FIG. 2A, which are not repeated in detail here.

In some embodiments, the above steps are all optional steps.

In some embodiments, the embodiment shown in FIG. 6 may also be combined with any one or more steps in the embodiment shown in FIG. 2A as a new embodiment.

In some embodiments of the present disclosure, a core network device is provided, which may include a first network element and a second network element, the first network element is a network element having a positioning management function, and the second network element is a network element having an access and mobility management function. The first network element may be configured to perform the connection releasing method executed by the first network element in the aforementioned embodiments of the present disclosure; and the second network element may be configured to perform the connection releasing method executed by the second network element in the aforementioned embodiments of the present disclosure.

In some embodiments of the present disclosure, an access network device is provided, which may be used to transmit data or signaling between a UE and a core network device.

In some embodiments of the present disclosure, a communication system is provided, which may include a UE, an access network device and a core network device. The core network device includes a first network element and a second network element, the first network element is a network element having a positioning management function, and the second network element is a network element having an access and mobility management function. The UE may be configured to perform the connection releasing method executed by the UE in the aforementioned embodiments of the present disclosure; the access network device may be configured to perform the connection releasing method executed by the access network device in the aforementioned embodiments of the present disclosure; the first network element may be configured to perform the connection releasing method executed by the first network element in the aforementioned embodiments of the present disclosure; the second network element may perform the connection releasing method executed by the second network element in the aforementioned embodiments of the present disclosure.

The embodiments of the present disclosure also propose an apparatus for implementing any of the above methods, for example, an apparatus is proposed, the above apparatus includes units or modules for implementing various steps performed by the UE in any of the above methods. For another example, another apparatus is proposed, including units or modules for implementing various steps performed by the network device (such as an access network device, a core network device, a core network function node, a first network element, a second network element, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of processor calling software, or in the form of a hardware circuit, or in part by processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 7A is a schematic diagram of a UE provided in an embodiment of the present disclosure. As shown in FIG. 7A, the UE 101 may include at least one of a transceiver module 7101 or a processing module 7102. In some embodiments, the transceiver module 7101 is configured to send a first message to a second network element, in which the first message is used to trigger release of a user plane connection, the user plane connection is a connection between the UE and a first network element, the first network element is a network element having a positioning management function or a sensing function, and the second network element is a network element having an access and mobility management function. Optionally, the transceiver module 7101 is configured to execute at least one of communication steps (such as step S2102, step S2103, step S2106, step S2107, step S2109, step S2110, which is not limited herein) related to "receiving and/or sending" performed by the UE in any of the above methods, which is not repeated here. Optionally, the processing module 7102 is configured to execute at least one of other steps (such as step S2101, step S2104, step S2105, step S2108, step S2111, which is not limited herein) performed by the UE in any of the above methods, which is not repeated here.

FIG. 7B is a schematic diagram of a first network element provided in an embodiment of the present disclosure. As shown in FIG. 7B, the first network element 1031 may include at least one of a transceiver module 7201 or a processing module 7202. In some embodiments, the transceiver module 7201 is configured to receive a fourth message sent by a second network element, in which the fourth message is used to request the first network element to release a user plane connection, the user plane connection is a connection between a user equipment (UE) and the first network element. The processing module 7202 is configured to determine whether to accept a request, from the UE, for releasing the user plane connection. Optionally, the transceiver module 7201 is configured to execute at least one of communication steps (such as step S2102, step S2103, step S2106, step S2107, step S2109, step S2110, which is not limited herein) related to "receiving and/or sending" performed by the first network element in any of the above methods, which is not repeated here. Optionally, the processing module 7202 is configured to execute at least one of other steps (such as step S2101, step S2104, step S2105, step S2108, step S2111, which is not limited herein) performed by the first network element in any of the above methods, which is not repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module maybe a module or include multiple submodules. Optionally, the multiple submodules respectively execute all or part of the steps required to be executed by the processing module. Optionally, the processing module may be replaced with the processor.

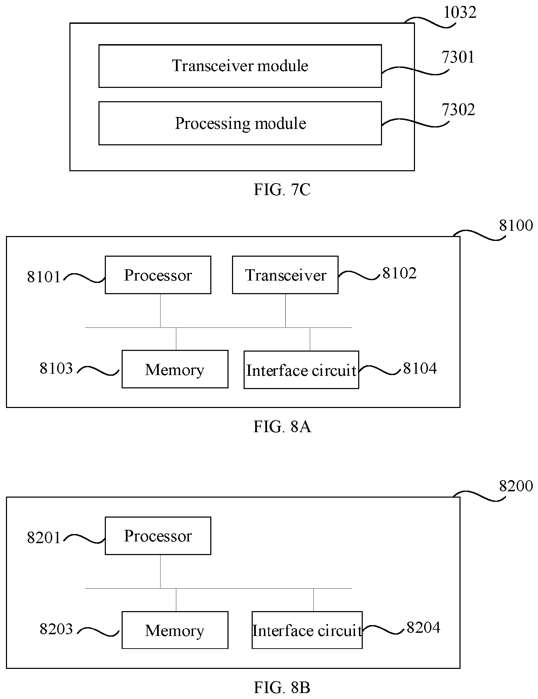

FIG. 7C is a schematic diagram of a second network element provided in an embodiment of the present disclosure. As shown in FIG. 7C, the second network element 1032 may include at least one of a transceiver module 7301 or a processing module 7302. In some embodiments, the transceiver module 7301 is configured to receive a first message sent by a user equipment (UE), in which the first message is used to trigger release of a user plane connection, the user plane connection is a connection between the UE and a first network element, the first network element is a network element having a positioning management function or a sensing function; and send a fourth message to the first network element, in which the fourth message is used to request the first network element to release the user plane connection. Optionally, the transceiver module 7301 is configured to execute at least one of communication steps (such as step S2102, step S2103, step S2106, step S2107, step S2109, step S2110, which is not limited herein) related to "receiving and/or sending" performed by the second network element in any of the above methods, which is not repeated here. Optionally, the processing module 7302 is configured to execute at least one of other steps (such as step S2101, step S2104, step S2105, step S2108, step S2111, which is not limited herein) performed by the second network element in any of the above methods, which is not repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module maybe a module or include multiple submodules. Optionally, the multiple submodules respectively execute all or part of the steps required to be executed by the processing module. Optionally, the processing module may be replaced with the processor.

FIG. 8A is a schematic diagram of a communication device 8100 provided in an embodiment of the present disclosure. The communication device 8100 may be any device in a communication system, for example, a UE, an access network device, a core network device, a network device or a server, or a chip, a chip system, or a processor that implements any of the above methods in the above device in the communication system. The communication device 8100 may be used to implement the method described in the above method embodiments, and for details, reference may be made to the description in the above method embodiments.

As shown in FIG. 8A, the communication device 8100 includes one or more processors 8101. The processor 8101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. Alternatively, the communication device 8100 is configured to execute any of the above methods. Alternatively, the processor 8101 is configured to call instructions to cause the communication device 8100 to execute any of the above methods.

In some embodiments, the communication device 8100 further includes one or more transceivers 8102. When the communication device 8100 includes one or more transceivers 8102, at least one of the communication steps (such as step S2102, step S2103, step S2106, step S2107, step S2109, step S2110, which is not limited herein) such as sending and/or receiving in the above methods is performed by the transceiver 8102, and at least one of the other steps (such as step S2101, step S2104, step S2105, step S2108, step S2111, which is not limited herein) is performed by the processor 8101.

In some embodiments, the transceiver may include a receiver and a transmitter, and the receiver and/or the transmitter may be separate or integrated. Optionally, the terms such as "transceiver", "transceiver unit", "transceiver machine", "transceiver circuit", etc. may be exchangeable with each other, the terms such as "transmitter", "transmitting unit", "transmitting machine", "transmitting circuit", etc. may be exchangeable with each other, and the terms such as "receiver", "receiving unit", "receiver", "receiving circuit", etc. may be exchangeable with each other.

In some embodiments, the communication device 8100 further includes one or more memories 8103 for storing instructions. Optionally, all or part of the memory 8103 may be outside the communication device 8100. Optionally, the communication device 8100 further includes one or more interface circuits 8104, which are connected to the memory 8103. Optionally, the interface circuit 8104 may be used to receive data from the memory 8103 or other apparatuses, and may be used to send data to the memory 8103 or other apparatuses. For example, the interface circuit 8104 may read data stored in the memory 8103 and send the data to the processor 8101.

The communication device 8100 described in the above embodiments may be a UE, an access network device, a core network device, a network device or a server, but the scope of the communication device 8100 described in the present disclosure is not limited thereto, and the structure of the communication device 8100 may not be limited by FIG. 8A. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 8B is a schematic diagram of a chip 8200 proposed in an embodiment of the present disclosure. In case where the communication device 8100 may be a chip or a chip system, reference may be made to the schematic diagram of the chip 8200 shown in FIG. 8B, but the present disclosure is not limited thereto.

The chip 8200 includes one or more processors 8201, and the chip 8200 is used to execute any of the above methods.

In some embodiments, the chip 8200 further includes one or more interface circuits 8204. Optionally, the terms such as "interface circuit", "interface", "transceiver pin" may be exchangeable with each other. In some embodiments, the chip 8200 further includes one or more memories 8203 for storing data. Optionally, all or part of the memory 8203 may be outside the chip 8200.

Optionally, the interface circuit 8204 is connected to the memory 8203, and may be used to receive data from the memory 8203 or other apparatuses, and the interface circuit 8204 may be used to send data to the memory 8203 or other apparatuses. For example, the interface circuit 8204 may read data stored in the memory 8203 and send the data to the processor 8201.

In some embodiments, the interface circuit 8204 performs at least one of the communication steps (for example, step S2102, step S2103, step S2106, step S2107, step S2109, step S2110, which is not limited herein) such as "sending and/or receiving" in the above method. The interface circuit 8204 performs the communication steps such as sending and/or receiving in the above method, for example, means that the interface circuit 8204 performs data interaction between the processor 8201, the chip 8200, the memory 8203, or the transceiver device. In some embodiments, the processor 8201 performs at least one of the other steps (for example, step S2101, step S2104, step S2105, step S2108, step S2111, which is not limited herein).

The modules and/or devices described in the embodiments such as virtual devices, physical devices, chips, etc. can be combined or separated as needed. Optionally, some or all steps can also be performed by multiple modules and/or devices in collaboration, which is not limited here.

The present disclosure also proposes a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also provides a program product, which, when executed by the communication device 8100, enables the communication device 8100 to execute any of the above methods. Optionally, the program product is a computer program product.

The present disclosure also provides a computer program, which, when executed on a computer, causes the computer to execute any one of the above methods.

## Claims

1. A connection releasing method, performed by a user equipment (UE), comprising:
sending a first message to a second network element, wherein the first message is used to trigger release of a user plane connection, the user plane connection is a connection between the UE and a first network element, the first network element is a network element having a positioning management function or a sensing function, and the second network element is a network element having an access and mobility management function.

2. The method according to claim 1, wherein the first message comprises at least one of:
a first message identifier (ID);
a user plane connection release cause;
a user plane connection ID;
a UE ID; or
a first network element ID.

3. The method according to claim 1 or 2, further comprising:
receiving a second message sent by the second network element, wherein the second message is any one of:
a first release message, wherein the first release message indicates that the user plane connection is already released by the first network element;
a second release message, wherein the second release message instructs the UE to release the user plane connection; or
a rejection message, wherein the rejection message is used to reject the UE from releasing the user plane connection.

4. The method according to claim 3, wherein the second message comprises at least one of:
a user plane connection ID;
a UE ID; or
a first network element ID.

5. The method according to claim 3 or 4, further comprising:
determining that the second message is second release indication information; and
releasing the user plane connection.

6. The method according to claim 5, further comprising:
sending a third message to the second network element, wherein the third message indicates that the user plane connection is already released by the UE.

7. The method according to any one of claims 3-6, further comprising:
determining that there is no other user plane connection between the UE and the first network element; and
releasing a packet data unit (PDU) session to which the user plane connection belongs, wherein the PDU session is used to carry the user plane connection between the UE and the first network element.

8. The method according to any one of claims 3-7, further comprising:
determining that a first condition is met; and
resending the first message to the second network element;
wherein, the first condition comprises at least one of:
the second message being used to reject the UE from releasing the user plane connection; or
the second message being not received within a specific time period after the first message is sent.

9. A connection releasing method, performed by a second network element, wherein the second network element is a network element having an access and mobility management function, and the method comprises:
receiving a first message sent by a user equipment (UE), wherein the first message is used to trigger release of a user plane connection, the user plane connection is a connection between the UE and a first network element, the first network element is a network element having a positioning management function or a sensing function; and
sending a fourth message to the first network element, wherein the fourth message is used to request the first network element to release the user plane connection.

10. The method according to claim 9, wherein the first message comprises at least one of:
a first message identifier (ID);
a user plane connection release cause;
a user plane connection ID;
a UE ID; or
a first network element ID.

11. The method according to claim 9 or 10, wherein, the first message comprises the first network element ID, and sending the fourth message to the first network element comprises:
sending the fourth message to a first network element corresponding to the first network element ID.

12. The method according to any one of claims 9-11, further comprising:
receiving a fifth message sent by the first network element, wherein the fifth message is any one of:
a first release message, wherein the first release message indicates that the user plane connection is already released by the first network element;
a second release message, wherein the second release message instructs the UE to release the user plane connection; or
a rejection message, wherein the rejection message is used to reject the UE from releasing the user plane connection.

13. The method according to claim 12, wherein the fifth message comprises at least one of:
a user plane connection ID;
a UE ID; or
a first network element ID.

14. The method according to claim 12 or 13, further comprising:
sending a second message to the UE, wherein a content indicated by the second message is the same as that of the fifth message.

15. The method according to any one of claims 12-14, further comprising:
receiving a third message sent by the UE, wherein the third message indicates that the user plane connection is already released by the UE; and
sending a sixth message to the first network element, wherein a content indicated by the sixth message is the same as that of the third message.

16. A connection releasing method, performed by a first network element, wherein the first network element is a network element having a positioning management function or a sensing function, and the method comprises:
receiving a fourth message sent by a second network element, wherein the fourth message is used to request the first network element to release a user plane connection, the user plane connection is a connection between a user equipment (UE) and the first network element, the second network element is a network element having an access and mobility management function; and
determining whether to accept a request, from the UE, for releasing the user plane connection.

17. The method according to claim 16, wherein the fourth message comprises at least one of:
a first message identifier (ID);
a user plane connection release cause;
a user plane connection ID;
a UE ID; or
a first network element ID.

18. The method according to claim 16 or 17, further comprising:
sending a fifth message to the second network element, wherein the fifth message comprises any one of:
first release indication information, wherein the first release indication information indicates that the user plane connection is already released by the first network element;
second release indication information, wherein the second release indication information instructs the UE to release the user plane connection; or
rejection information, wherein the rejection information is used to reject the UE from releasing the user plane connection.

19. The method according to claim 16, further comprising:
releasing the user plane connection between the UE and the first network element.

20. The method according to claim 18 or 19, further comprising:
receiving a sixth message sent by the second network element, wherein the sixth message indicates that the user plane connection is already released by the UE.

21. A connection releasing method, performed by a core network device comprising a first network element and a second network element, wherein the first network element is a network element having a positioning management function or a sensing function, and the second network element is a network element having an access and mobility management function, and the method comprises:
receiving, by the second network element, a first message sent by a user equipment (UE), wherein the first message is used to trigger release of a user plane connection, the user plane connection is a connection between the UE and a first network element, the first network element is a network element having a positioning management function or a sensing function;
sending, by the second network element, a fourth message to the first network element, wherein the fourth message is used to request the first network element to release the user plane connection; and
determining, by the first network element, whether to accept a request, from the UE, for releasing the user plane connection.

22. A user equipment (UE), comprising:
a transceiver module, configured to send a first message to a second network element, wherein the first message is used to trigger release of a user plane connection, the user plane connection is a connection between the UE and a first network element, the first network element is a network element having a positioning management function or a sensing function, and the second network element is a network element having an access and mobility management function.

23. A second network element, comprising:
a transceiver module, configured to receive a first message sent by a user equipment (UE), wherein the first message is used to trigger release of a user plane connection, the user plane connection is a connection between the UE and a first network element, the first network element is a network element having a positioning management function or a sensing function; and send a fourth message to the first network element, wherein the fourth message is used to request the first network element to release the user plane connection.

24. A first network element, comprising:
a transceiver module, configured to receive a fourth message sent by a second network element, wherein the fourth message is used to request the first network element to release a user plane connection, the user plane connection is a connection between a user equipment (UE) and the first network element; and
a processing module, configured to determine whether to accept a request, from the UE, for releasing the user plane connection.

25. A core network device, comprising a first network element and a second network element, wherein the first network element is configured to perform the connection releasing method according to any one of claims 9 to 15, and the second network element is configured to perform the connection releasing method according to any one of claims 16 to 20.

26. A communication system, comprising a core network device and a user equipment (UE), wherein the core network device comprises a first network element and a second network element, the first network element is a network element having a positioning management function, the second network element is a network element having an authentication management function, wherein the UE is configured to perform the connection releasing method according to any one of claims 1 to 8, the first network element is configured to perform the connection releasing method according to any one of claims 9 to 15, and the second network element is configured to perform the connection releasing method according to any one of claims 16 to 20.

27. A communication device, comprising:
one or more processors;
wherein the communication device is configured to perform the connection releasing method according to any one of claims 1 to 8, or any one of claims 9 to 15, or any one of claims 16 to 20.

28. A storage medium having instructions stored thereon, wherein when the instructions are executed on a communication device, the communication device is caused to perform the connection releasing method according to any one of claims 1 to 8, or any one of claims 9 to 15, or any one of claims 16 to 20.
